# EUROPEAN PATENT SPECIFICATION

(11) **EP 1 979 885 B1**
(45) Date of publication and mention of the grant of the patent: **01.09.2010**
(21) Application number: 07708523.1
(22) Date of filing: 19.01.2007
(51) Int. Cl.: G08G 1/09, H04H 20/55, H04L 27/26, H04L 1/00

(54) **METHOD FOR TRANSMITTING AND RECEIVING TRAFFIC INFORMATION AND APPARATUS THEREOF**
VERFAHREN ZUM SENDEN UND EMPFANGEN VON VERKEHRSINFORMATIONEN UND VORRICHTUNG DAFÜR
PROCEDE DE TRANSMISSION ET DE RECEPTION DE DONNEES DE TRAFIC, ET APPAREIL ASSOCIE

(30) Priority: 19.01.2006 US 759963 P; 23.11.2006 KR 20060116370
(43) Date of publication of application: 15.10.2008
(73) Proprietor: LG Electronics Inc., Yongdungpo-gu Seoul 150-010 (KR)
(72) Inventor: KIM, Seung Won, Seoul 122-905 (KR); KIM, Young In, Seoul 151-052 (KR); PARK, Sang O, Seoul 158-821 (KR); SEO, Chu Hyun, Seoul 151-794 (KR)
(74) Representative: Cabinet Plasseraud
(86) International application number: PCT/KR2007/000324
(87) International publication number: WO 2007/083947

(56) References cited:
- EP-A- 1 041 755
- EP-A- 1 445 750
- EP-A- 1 463 255
- WO-A-02/13161
- WO-A1-2005/020576
- GB-A- 2 342 260
- JP-A- 2004 186 741
- KR-A- 20040 084 508
- KR-A- 20050 037 776
- US-A1- 2005 081 240

## Description

### Technical Field

The present invention relates to a method for transmitting and receiving traffic information and apparatus therefor, and more particularly, to a method for transmitting and receiving traffic information using a broadcast system. Background Art

Recently, the technical developments for digital signal processing and communications enable digital contents to be provided by wireless/wire. As the digital contents are provided, various kinds of information such as news, stock market information, weather, traffic information, and the like can be carried by broadcast signals.

Meanwhile, the demand for providing traffic information to vehicle drivers has risen due to the increased number of vehicles in a downtown area or the increased number of vehicles for vacation. To meet this demand, methods of providing traffic information on roads as additional information via satellite or terrestrial broadcasting have been developed. However, various kinds of different broadcast receiving terminals respectively manufactured by different manufacturers have difficulty in detecting the related art traffic information provided by wireless via broadcast signals and also have difficulty in interpreting the detected traffic information equally.
Document EP-A-1 463 255 discloses a data processing apparatus which maps input symbols to be communicated onto a predetermined number of carrier signals of an Orthogonal Frequency Division Multiplexed (OFDM) symbol, in an OFDM modulated system such as the Digital Video Broadcasting-Terrestrial (DVB-T) standard.

### Disclosure of Invention Technical Problem

Accordingly, the present invention is directed to a method for transmitting and receiving traffic information and apparatus therefor that substantially obviate one or more of the problems due to limitations and disadvantages of the related art. An object of the present invention is to provide a method for transmitting and receiving traffic information and apparatus therefor by which the traffic information can be efficiently delivered to a broadcast receiving terminal.

### Technical Solution

The present invention is characterized in transmitting time information useable in providing traffic information according to broadcast transmitting rules of DVB-H or DVB-T.

Additional features and advantages of the invention will be set forth in the description which follows, and in part will be apparent from the description, or may be learned by practice of the invention. The objectives and other advantages of the invention will be realized and attained by the structure particularly pointed out in the written description and claims thereof as well as the appended drawings.

To achieve these and other advantages and in accordance with the purpose of the present invention, as embodied and broadly described, there is proposed a method for transmitting traffic information according to claim 1.

To further achieve these and other advantages and in accordance with the purpose of the present invention, there is proposed an apparatus for transmitting traffic information according to claim 6.

To further achieve these and other advantages and in accordance with the purpose of the present invention, there is further proposed an apparatus for receiving traffic information according to claim 7.

To further achieve these and other advantages and in accordance with the purpose of the present invention, finally, there is proposed a method of receiving traffic information according to claim 12.

It is to be understood that both the foregoing general description and the following detailed description are exemplary and explanatory and are intended to provide further explanation of the invention as claimed.

### Advantageous Effects

The present invention enables a driver of a vehicle running in a traffic-jammed metropolitan area to arrive at a destination in a short time using traffic information for estimated roads. And, the present invention facilitates the driver to use a parking lot.

Also, the present invention can represent information for timing points, time intervals or periods used for vehicle operations precisely and in detail. IF the information is appropriately used, it is able to accurately represent the information for the period and the like with a small data volume. If iterative information is used, information to be provided can be efficiently delivered.

### Brief Description of the Drawings

FIG. 1 is a schematic diagram of a system for transmitting and receiving traffic information according to the present invention;

FIG. 2 is a structural diagram of traffic information transmitted via a broadcast signal;

FIG. 3 is a diagram of a syntax structure of a message management container 21;

FIG. 4 is an exemplary diagram of a template of a CTT event container carrying CTT information and a CTT location container;

FIG. 5 is an exemplary diagram of a template of a CTT component included in the CTT event container shown in FIG. 4;

FIG. 6 is an exemplary diagram of a template of a CTT location container included in the CTT event container shown in FIG. 4;

FIG. 7 is an exemplary structural diagram of a congestion and travel time component included in a CTT event container;

FIG. 8 is an exemplary structuraldiagram of a component if CTT information shown in FIG. 7 is an average link speed;

FIG. 9 is an exemplary structural diagram of a component if CTT information shown in FIG. 7 is a travel time;

FIG. 10 is an exemplary structural diagram of a component if CTT information shown in FIG. 7 is a link delay time;

FIG. 11 is an exemplary diagram of first type time information;

FIG. 12 is an exemplary structural diagram of a component carrying predicted information for CTT information included in a CTT event container;

FIGs. 13 to 16 are exemplary structural diagrams of components according to types of the prediction information for the CTT information shown in FIG. 12;

FIG. 17 is an exemplary diagram of second type time information;

FIG. 18 and FIG. 19 are exemplary diagrams of prediction information for CTT information including second type time information;

FIG. 20 is an exemplary diagram of third type time information;

FIG. 21 is an exemplary diagram of a selector for a day selection of the week and the repetition of an event;FIG. 22 and FIG. 23 are exemplary diagrams for a method of calculating prediction information for CTT information;

FIG. 24 is an exemplary structural diagram of a message for parking lot associated information;

FIG. 25 is an exemplary diagram of an opening hour component of parking lot associated information;

FIG. 26 is an exemplary diagram of a pricing payment component of parking lot associated information;

FIG. 27 is an exemplary diagram of a service operation component of parking lot associated information;

FIG. 28 is an exemplary diagram of a capacity component;

FIG. 29 is a block diagram of an apparatus for transmitting the above-mentioned traffic information according to one embodimentof the present invention;

FIG. 30 is a diagram of signal arrangement according to a result of a frame configured by a frame configuring unit shown in FIG. 29;

FIG. 31 is a block diagram of an apparatus for transmitting the above-mentioned traffic information according to another embodimentof the present invention;

FIG. 32 is a diagram of an example that a DVB-H type sliced service and a service transmitted on a shared channel by DVB-T and DVB-H are transmitted on channels;

FIG. 33 is an exemplary diagram of a location of a descriptor transmittable by having descriptor table information for traffic information included therein;

FIG. 34 and FIG. 35 are diagrams of PAT and PMT as program information transmitted by being included in MPEG-2 TS type signals, respectively;

FIG. 36 is an exemplary diagram of a descriptor capable of parsing a broadcast signal carrying traffic information according to the present invention;

FIG. 37 is a block diagram of an apparatus for receiving traffic information according to one embodiment of the present invention;

FIG. 38 is a block diagram of an apparatus for receiving traffic information according to another embodiment of the present invention;

FIG. 39 is a flowchart of a method of receiving traffic information according to one embodiment of the present invention;

FIGs. 40 to 43 are diagrams for displaying traffic information provided according to an embodimentof the present invention and

FIG. 44 is a flowchart of a method of transmitting and receiving traffic information according to one embodiment of the present invention.

### Best Mode for Carrying Out the Invention

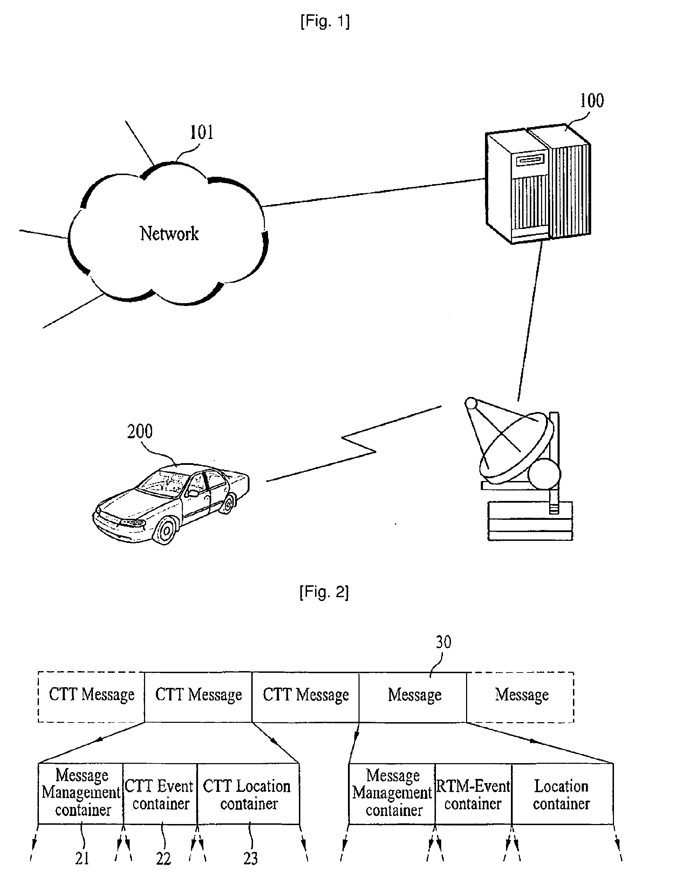

FIG. 1 is a schematic diagram of a system for transmitting and receiving traffic information according to the present invention.

In a network shown in FIG. 1, a traffic information providing server 100 of a broadcasting service company reconfigures various kinds of traffic information collected via various paths including operator inputs, other servers via the network 101, and probe cars and other traffic information collected from other servers for example and then transmits the reconfigured traffic information. A traffic information receiving device loaded in a vehicle 200 or the like, e.g., a navigation device receives the traffic information and then displayed the received traffic information.

The traffic information providing server 100 transmits various kinds of traffic information necessary for vehicle operations such as road CTT information (hereinafter named congestion and travel time (CTT) information), road block information, parking lot information, and the like by radio for example.

FIG. 2 is a structural diagram of traffic information transmitted via a broadcast signal.

Referring to FIG. 2, the CTT (congestion and travel time) information can be exemplarily carried by a message structure. Traffic information has a configuration of a sequence of message segments. One of the message segments in the sequence can correspond to a CTT (congestion and travel-time information) message that indicates CTT information.

The CTT messageincludes a message management container 21, a CTT even container (application event container) 22, and a CTT location container 23.

And, another traffic information different from the CTT message, e.g., information 30 for occurrences of factors (accident, slippery road, etc.) working as hindrance on road operations can be delivered by the message structure exemplarily shown in FIG. 2.

The message management container 21 carries message management date and time information.

The CTT event container 22 carrying the CTT information contains a current-congestion and travel time status, a prediction of congestion and travel time status, and the like of each link. In this case, the link can indicates a road section having no crossroad between diverging points or crossroads. The congestion and travel time status includes an average link speed, a travel time, a link delay, and the like.

And, the CTT location container 23 carries information for a location of a link.

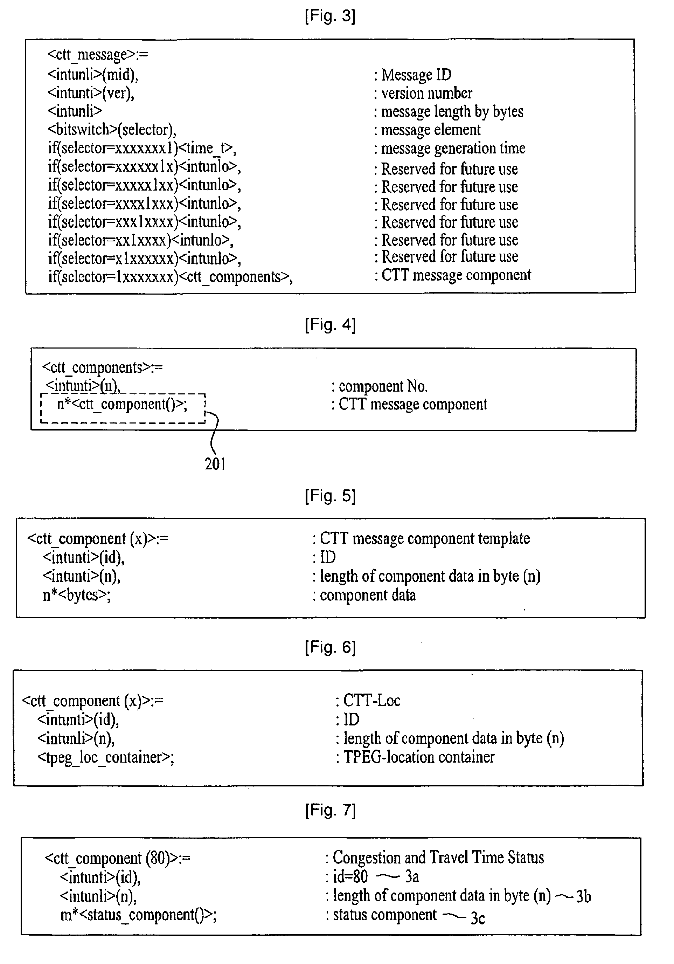

FIG. 3 is a diagram of a syntax structure of the message management container 21.

Referring to FIG. 3, a message management container contains a message identifier identifying CTT information, a version number, a CTT message length, and a message generation time. In this case, the message generation time carries information for generation time of a message with reference to a timing point of a message transmission.

FIG. 4 is an exemplary diagram of a template of a CTT event container carrying CTT information and a CTT location container.

Referring to FIG. 4, each of the CTT event container or the CTT location container can include a number of components and at least one or more CTT components 201.

FIG. 5 is an exemplary diagram of a template of a CTT component included in the CTT event container shown in FIG. 4.

Referring to FIG. 5, a CTT component includes an identifier for CTT information, a byte-unit component length and CTT information component data among traffic information message components.

Yet, FIG. 6 exemplarily shows a template of a CTT location container included in the CTT event container shown in FIG. 4.

Referring to FIG. 6, a CTT location container contains an identifier for a location container, a byte-unit component length, and location container data.

If an identifier of the CTT event container 22 is 80h, the CTT event container 22 can include a status component indicating CTT information (current status information) for an average link speed, a travel time, a link delay, and the like as current operation information.

FIG. 7 is an exemplary structural diagram of a congestion and travel time component included in a CTT event container.

Referring to FIG. 7, an identifier 80h ('h' indicates a hexadecimal number) 3a is assigned to a CTT component. The CTT component includes a field 3b representingan overall data length of an included status component by byte unit and m status components 3c.

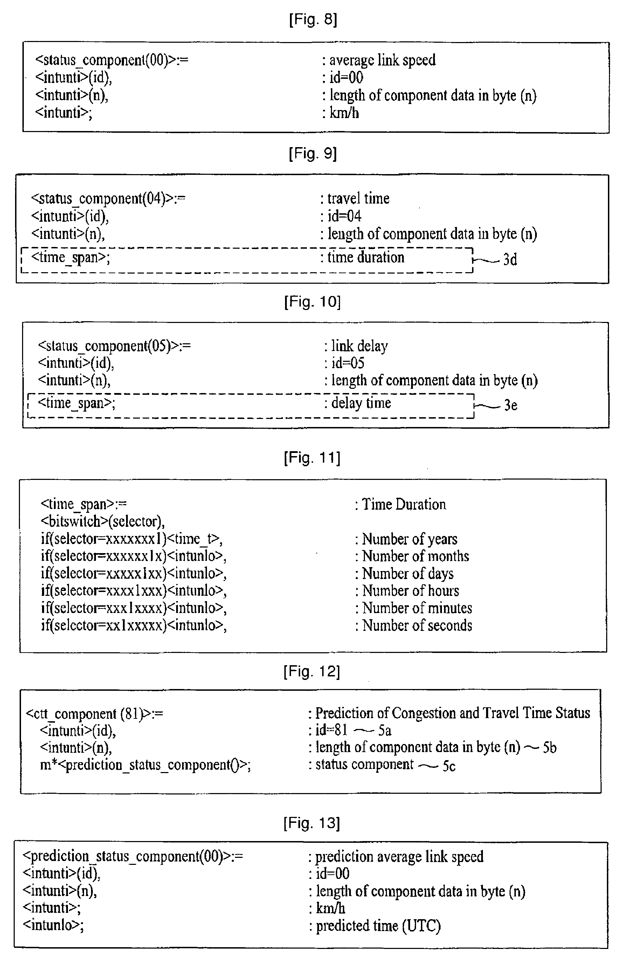

Information for the aforesaid average link speed, travel time and link delay is delivered to each of the status components in a format exemplarily shown in FIG. 8, Fig. 9, or FIG. 10.

An identifier 00 can be assigned to the average link speed shown in FIG. 8. An identifier 04 can be assigned to the travel time shown in FIG. 9. And, an identifier 05 can be assigned to the link delay shown in FIG. 10. In this case, the link delay indicates a time delayed according to a current traffic status for a time taken to pass through a corresponding link at a speed limit regulated for the corresponding link.

FIG. 11 is an exemplarydiagram of first type time information which carries the travel time shown in FIG. 9 and the link delay shown in FIG. 10.

Referring to FIG. 11, a first type for time information is represented as <time_span> The first type for the time information includes a selector for selecting a time span and is able to include at least one information among a year span, a month span, a day span, a time span, a minute span, and a second span.

Syntax for the type shown in FIG. 11 is explained in detail as follows.

First of all, an additional byte can follow each bit for which a value of a selector corresponding to 'bitswitch' in the first type. In case that at least one byte follows a selector, a sequence of the byte value becomes a byte according to a byte corresponding to a bit close to an LSB of the selector. For instance, a select '8 bits'can indicate year, month, date, time, minute, and second according to digit values of the respective bits.

And, the byte following the selector becomes the respective bit digit values according to the LSB sequence of the selector. If a value according to a <time_span> type is '18h 02h 1Eh', the value corresponding to the selector is 18h (00011000), which represents that a bit value corresponding to a minute and hour is set. So, '02h' following the selector becomes a value corresponding to 00001000 closer to the LSB among a value of '1' of the selector, i.e., the hour. And, '1Eh(=30)' corresponding to '00010000' becomes the minute. Hence, '<time_span>=18h 02h 1Eh' means a duration of '2 hours and 30 minutes'. For another instance, '06h 01h 0Fh' indicates a duration of '1 month and 15 days'.

If a travel time is '30 minutes' according to the example shown in FIG. 9, a status component for the travel time for the link carries '04h 02h 10h 1Eh'. In this case, the '04h' in the front is an ID that indicates that a status component is for the travel time. The '02h' is a value that indicates a length of additional data, i.e., data corresponding to <time_span>. And, the '10h 1Eh' is a value coded according to the <time_span> type exemplarily shown in FIG. 11 and indicates '30 minutes'.

If a travel time is '45 minutes' according to the example shown in FIG. 10, a status component for the travel time for the link carries '05h 02h 10h 2Dh'. In this case, the latter '10h 2Dh'is the value according to the <time_span> type exemplarily shown in FIG. 13 and is interpreted by the aforesaid method to indicate '45 minutes'.

In another embodiment of the present invention, each of the status components of the travel time and link delay can have the 1-byte time information <intunti> instead of the format of <time_span> shown in FIG. 11. And, different identifying values, e.g.,01 and 02 can be assigned to the status components of the travel time and link delay having the 1-byte time information each to be discriminated from the status components shown in FIG. 9 and FIG. 10, respectively.

Thus, the traffic information receiving apparatus recognizes that time span information coded according to which type is loaded on a status component and is then able to decode the corresponding information.

If an identifier of the CTT event container 22 is 81h, the CTT event container 22 is able to carry information for prediction CTT status. In this case, the prediction CTT status means the prediction information for the CTT information. The prediction CTT status can include a prediction average link speed, a prediction travel time, and the like.

FIG. 12 is an exemplary structural diagram of a component carrying predicted informationfor CTT information included in a CTT event container.

Referring to FIG. 12, an identifier 81h (5a) is assigned to a CTT component carrying prediction information and includes a field 5b representing a lengthof overall data of the included status components and m status components 5c carrying prediction information each.

And, the aforesaid prediction average link speed and the prediction travel time can be carried by the status component for the prediction information.

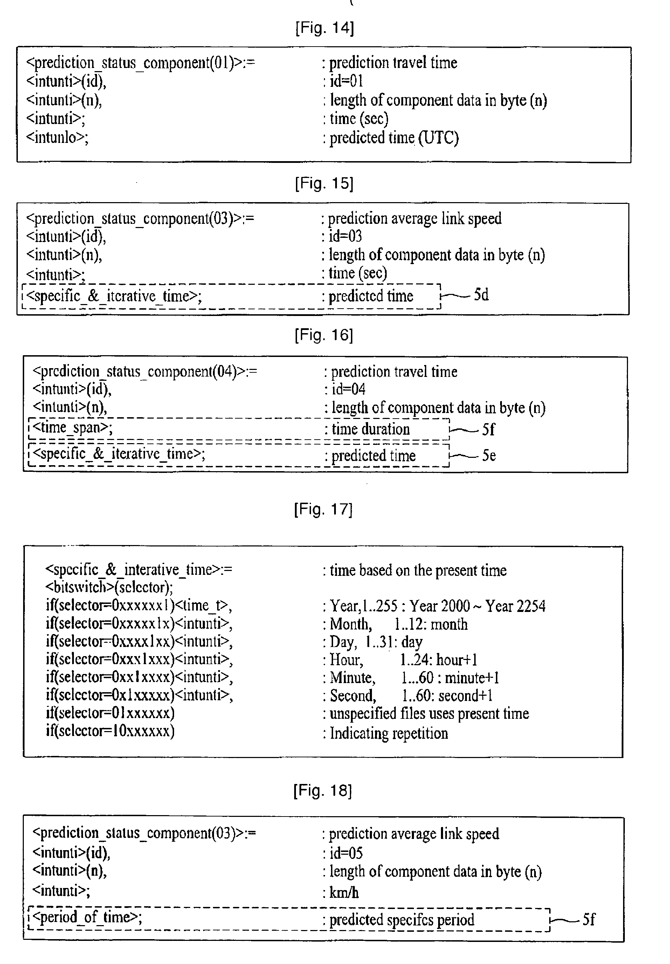

FIG. 13 and FIG. 14 exemplarily show status components carrying a prediction average link speed and a prediction travel time, respectively.

Referring to FIG. 13 and FIG. 14, an identifier 00 (FIG. 13) and an identifier 01 (FIG. 4) can be assigned to a prediction average link speed and a prediction travel time, respectively. A status component carrying prediction information can be carried by a 4-byte field <intunlo> coded for a predicted future time in a format of the UTC (universal time coordinated) agreement world time. In this case, the predicted time indicates a time for obtaining the prediction information, i.e., a specific date or hour instead of a current time.

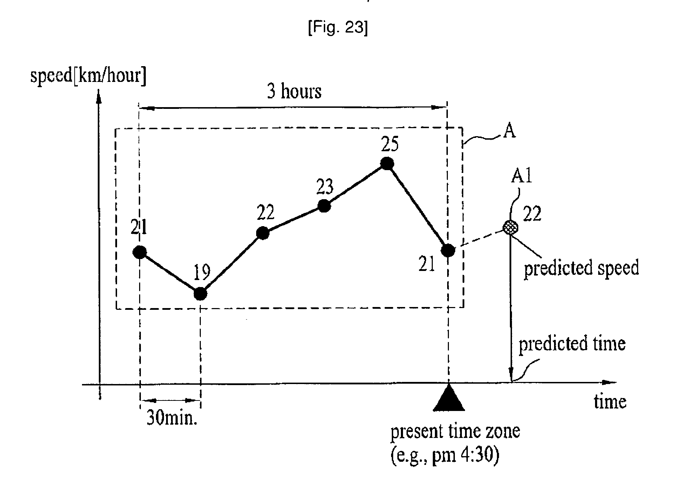

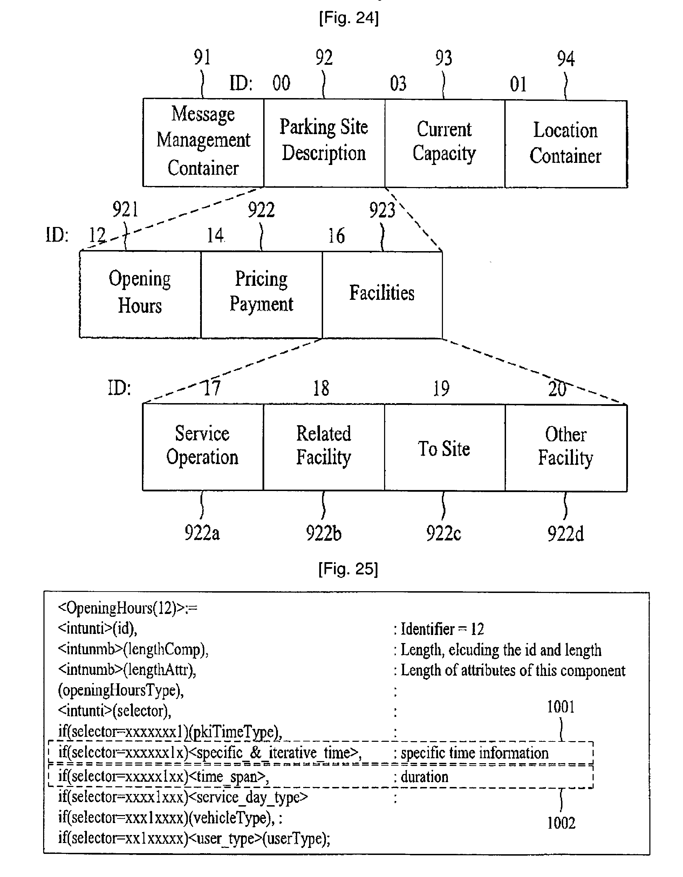

In order to obtain prediction information, a traffic information transmitting apparatus is capable of generating prediction information for an average link speed, a travel time, and the like according to current traffic information collected via various paths and a traffic information database. For instance, the prediction travel time can be found by a length of a link in the respective links established in its database using the predicted average speed. A method of generating the prediction information will be explained in detail with reference to FIG. 23 and FIG. 24 later.

FIG. 15 and FIG. 16 show another formats of status components carrying a prediction average link speed and a prediction travel time, respectively.

Referring to FIG. 15, a status component for a prediction average link speed among status components for prediction information can have an identifier 03 and is able to include a status component data length for the prediction average link speed, the prediction average link speed, and a predicted time of the speed.

Referring to FIG. 16, a status component for a prediction travel time among status components for prediction information can have an identifier 04 and is able to include a status component data length for the prediction average link speed, the prediction travel time, and a predicted time of the prediction travel time.

In this case, the predicted time is the provided time information for the prediction information and indicates a second type of the time information for the traffic information. The second type for the time information is represented as <specific_& _iterative_time> and indicates a predicted time necessary to transmit the prediction information.

The status components, as shown in FIG. 15 and FIG. 16, of the prediction average link speed and the prediction travel time having the information 5d and the information 5e for the predicted times configured according to <specific_&_iterative_time> can have identifiersdifferent from those shown in FIG. 13 and FIG. 14, e.g., identifiers 03 and 04, respectively.

In the embodimentshown in FIG. 16, the status component for the prediction travel time can have information 5f coded according to the aforesaid <time_span> type for the prediction travel time.

FIG. 17 is an exemplary diagram of second type time information.

Referring to FIG. 17, second type time information includes a selector for selecting a random timing point and is able to include at least one of time information indicating a current time of year, month, date, hour, minute, and second and information indicating whether the time is periodic information according to a value of the selector. A second type syntax of the time information is explained with reference to FIG. 17 as follows.

First of all, a value of the selector corresponding to 'bitswitch' precedes and an additional byte can follow the selector one by one for each bit having a value of '1' in the selector. A value of the following byte is carried in a sequence of bytes corresponding to a bit close to an LSB of the selector. The selector can represent year, month, date, hour, minute, second, and a time at a position where the selector (i.e., a time of an undesignated field) is 0 as equality to a present time component and units of iterative time. The meaning of each of the units is shown in FIG. 17.

For instance, if a value according to a <specific_&_iterative_time> is '58h 0Eh 1Fh', a value corresponding to a selector is 58h (= 0101 1000). And, '1' close to MSB indicates that a time component of an undesignated field is the same time component of a present time. A second '1' from the MSB indicates 'minute and a third '1' indicates 'hour'.

The '0Eh (=14)'following the selector is a value corresponding to '00001000' closer to LSB and indicates 'hour'. And, the '1Fh (=31)'is a value corresponding to 00010000 and indicates 'minute'. And, the elements for the rest of the fields (year, month, date, and second) do not exist to indicate a time component corresponding to a present time. So, if a present date is October 12, 2006, the '<specific_&_iterative_time>:=58h 0Eh 1Fh' means 13:30, October 12, 2006. In this case, it is assumed that 'second' is equal to that of the present time since the 'second' may be insignificant. Since values greater than 1 are recorded in the fields of 'year', 'hour', 'minute', and 'second' of the <specific_ &_iterative_time>, the '0Eh' indicates 13 hours and the '1Fh' indicates 30 minutes.

For another instance, if <specific_&_iterative_time> is '50h 1Fh', it indicates bits for the 'minute' and 'undesignated fields are equal to those of present date and hour'. The '1Fh' is a value for 'minute'. If present date and hour are 15:00, October 12, 2006, the time information indicates 15:30, October 12, 2006.

The <specific_&_iterative_time> type exemplarily shown in FIG. 17 is able to reduce an information quantity, which is needed to carry information for a random timing point, smaller than that of the examples shown in Fig. 13 and FIG. 14 using information for a present time. Of course, it is able to carry information for random date and hour using all information for a present time for all fields.

For instance, if '15:30 00, October 12, 2006' is coded according to a <specific_& _iterative_time> type, it becomes '3Fh 07h 0Ah 0Ch 0Eh 1Fh 01h'. In this case, '3Fh' is a value for a selector and the respective following bytes indicate values for year, month, date, hour, minute, and second in a sequence of the respective bytes.

Hence, if a travel time predicted for a link at 14:30 today is 30 minutes, a traffic information transmitting apparatus transmits a value of '04h 05h 10h 1Eh 58h 0Fh 1Fh' carried by a status component of a prediction travel time for the link. In this case, the foremost '04h' is an ID indicating that the status component carries a prediction travel time of the <specific_&_iterative_time> type. The '05h'is a value indicating lengths of data 5e and 5f corresponding to additional data, i.e., <time_span> and <specific_& _iterative_time> types. The '10h 1Eh'is a value according to the <time_span> type exemplarily shown in FIG. 11 and is interpreted in the aforesaid manner to indicate '30 minutes'. The '58h 0Fh 1Fh'is a value coded according to the <specific_& _iterative_time> type shown in FIG. 17 and is interpreted in the aforesaid manner to indicate a timing point of '14:30 October 12, 2006' if a current date is October 12, 2006.

In the same manner, if a predicted average speed for a random link is 40km/h with reference to 14:30 today, a value of '03h 04h 28h 58h 0Fh 1Fh'can be carried by a status component of a prediction average link speed for the link. In this case, the '28h' is a value indicating a speed 130km/h and the '58h 0Fh 1Fh' indicates that'14:30 October 12, 2006' is a predicted timing point if a present date is October 12, 2006.

In another embodiment of the present invention, in case that prediction operation information for a link is carried, it is able to deliver prediction information for a specific period instead of delivering a specific timing point.

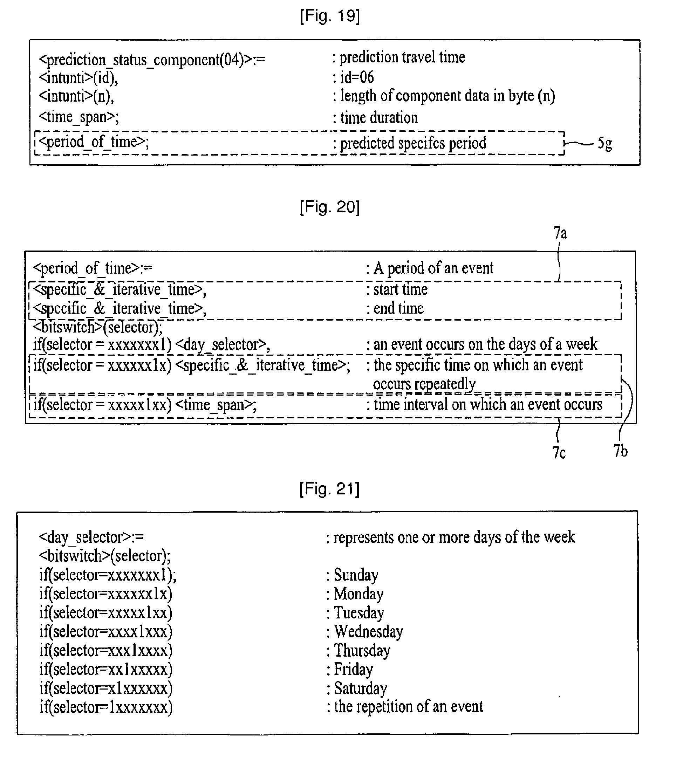

FIG. 18 and FIG. 19 are another exemplary diagrams of prediction information for CTT information, in which a status component of a prediction average link speed for a specific period and a status component of a prediction travel time are shown, respectively. A third type of time information is exemplarily shown to carry traffic information predicted for a specific period, which is represented as <period_of_time> hereof. And, identifiers 05 and 06 can be assigned to the status components carrying predicted operation information of the average speed and travel time for the specific period in FIG. 18 and FIG. 19, respectively.

FIG. 20 is an exemplary diagram of third type time information to carry traffic information predicted for the predicted specific period shown in FIG. 18 and FIG. 19.

Referring to FIG. 20, time information shown in FIG. 20 includes at least one of a period information field 7a for a start point and an end point of a specific period according to the <specific_&_iterative_time> type, a selector corresponding to 'bitswitch', a day selection field <day_selector> following a value of the selector, the < specific_&_iterative_time> field shown in FIG. 17, and the <time_span> field of which syntax is exemplarily shown in FIG. 13.

FIG. 21 exemplarily shows a syntax of the day selection field.

Referring to FIG. 21, a 1-byte value coded according to the type exemplarily shown in FIG. 21 can be written in the <day_selector> field. Lower 7 bits of the written byte designate days of the week, respectively. And, MSB indicates a presence or non-presence of the repetition of the corresponding day. For instance, if <day_selector> = 01h, the MSB indicates that a day of an event occurrence is Sunday. If <day_selector> = 84h, the MSB indicates that an event repeatedly occurs on each Tuesday.

And, temporary information repeated everyday in a specific period designated by the period information field 7a can be carried by the <specific_&_iterative_time> field selectively following according the selector within the <period_of_time> type shown in FIG. 20.

The selectively following <time_span> field 7c carries a time interval from the timing point designated by the <specific_&_iterative_time> field. Of course, if a timing point within a specific period is carried only, the <time_span> field may not be included.

If a construction work is scheduled for a prescribed link from October 1, 2006 to January 1, 2007 and if the construction work is substantially carried out Monday to Thursday, a prediction travel time for the link can be provided by the status component exemplarily shown in FIG. 20 while the construction work is in progress.

In this case, the start time field of the specific period of the <period_of_time> field 5g, which is carried by the status component and shown in FIG. 20, can be set to October 1, 2006 and the end time field there of can be set to January 1, 2007. And, the selector is set to a value of '01h' indicating that the <day_selector> field follows. The < day_selector> includes a selector for selecting a day and a presence or non-presence of repetition of the corresponding day. And, the <day_selector> can include at least one of information indicating one of Monday to Sunday and information for a presence or non-presence of a traffic event repeated on the corresponding day. In the example shown in FIG. 20, the <day_selector> field can carry a value of '9Eh (= 1001 110)'indicating Monday to Thursday and a repetition.

In the same manner, assuming that a construction work is scheduled for a prescribed link from October 1, 2006 to January 1, 2007 and that the construction work is supposedto be carried out 10 p.m. to 12 p.m., Monday to Thursday, a prediction travel time for the link can be provided by the status component exemplarily shown in FIG. 18. And, the status component can be set to the value according to FIG. 20. In particular, the start time field of the specific period of the <period_of_time> field 5f is set to October 1, 2006 and the end time field thereof is set to January 1, 2007. And, the selector carries a value 07h indicting that <day_selector>, <specific_&_iterative_time> and <time_span> fields follow respectively. And, a value of 'BEh (= 1011 1110)' indicating a repetition of Monday to Friday is carried by the following <day_selector> field. A value of '58h 17h 01h' indicating 10 p.m. is carried by the next following < specific_&_iterative_time> field. And, a value of '08h 02h' indicating two hours can be carried by the last following <time_span> field.

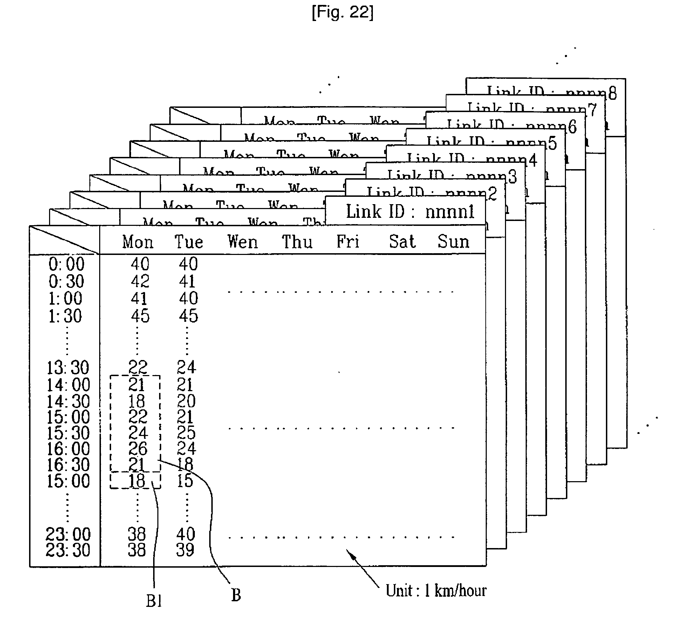

FIG. 22 and FIG. 23 are exemplary diagrams for a method of calculating prediction information for CTT information. A traffic information transmitting apparatus is able to store prediction information for each link according to a time to provide prediction information for CTT information. For instance, an average link speed of operation information is stored per day, time zone, week, month, and year. For instance, operation information is databased per 30 minutes to be stored in a format shown in FIG. 22. The numerical values shown in FIG. 22 are based on the unit of 'km/h' and follows the speed expressions for the transmission of operation information.

A speed at every 30-mintue timing point of the currently provided average speed of each link keeps being updated and stored for a prescribed time, e.g., 3 hours and a pattern of the speed variation is compared to the pattern stored in a database corresponding to a time zone of a current day.

FIG. 23 exemplarily shows a speed variation pattern on a prescribed day of the week.

Referring to FIG. 23, if a 3-hour based speed variation pattern-A up to a present time of 04:30 p.m. on Monday is shown, the pattern-A can be compared to a speed variation pattern-B between 01:30 p.m. and 04:30 p.m. on Monday in the database shown in FIG. 22.

If a sum of absolute values of the speed variation pattern differences, e.g., speed differences of the respective time zones (a sum of speed differences can be found by giving a weight value greater than a speed difference of a farther time zone to speed difference of a time zone closer to a present time zone) is equal to or smaller than a preset reference value, a speed variation pattern can be used. In particular, in case that a speed variation pattern is decided as usable, an average speed B1 in a time zone after 30 minutes from a present time, i.e., 05:00 p.m. on the database can be carried as a prediction average link speed. Of course, a prediction average link speed can be provided together with predicted time information by predicting an operational status for a time zone after 1 hour, 1 hour and 30 minutes, 2 hours or more hours.

If the speed variation pattern difference is greater than the preset reference value, the prediction average link speed is not provided. Alternatively, a progress or transition is calculated from a speed variation pattern for previous three hours and a predicted value for an average speed after 30 minutes is then obtained to provide as a prediction average link speed. In a method of obtaining a predicted value from FIG. 23, a highest weight is given to a present time and a lower weight is given to a time getting farther from the present time. They are multiplied together to find an average value. Alternatively, one of various graph estimations can be used to obtain the predicted value.

FIG. 24 shows an example of trafficinformation provided by a traffic information transmitting apparatus, in which an exemplary structural diagram of a message carrying parking lot associated information is shown.

Referring to FIG. 24, a traffic information transmitting apparatus is able to provided various kinds of traffic associated information using the above-described time information types. The traffic information transmitting apparatus is able to provide various components, e.g., a parking lot name component, a parking restriction component, and the like as well as the components exemplarily shown in the formats of FIG. 24.

One message segment includes a messagemanagement container 91, a parking lot information component, a capacity component 93, and a location container 94.

And, the parking lot information component 92 can include an opening hour component 921, a pricing payment component 922, and a facility component 923.

Moreover, the facility component 923 can include a service operation component 922a, a related facility component 922b, a target site component 922c, and other facility component 922d.

In the following description, details of the components included in the parking lot information component 92 are explained.

FIG. 25 shows the opening hour component exemplarily shown in FIG. 24.

Referring to FIG. 25, an opening hour component is able to carry opening hours of a parking lot. Information for a location of a parking lot, information for commands, and the like can be individually identified by other components, respectively. The opening hour component includes a type of opening hours (openingHoursType) and is able to include at least one of a parking lot time type (pkiTimeType), a parking service type (service_day_type), a vehicle type (vehicleType), and a user type (user Type) according to a value of a selector. In particular, the opening hour component 921, according to a value of the selector, includes the <time_span> field 1002 exemplarily shown in FIG. 11 and the <specific_&_iterative_time> field 1001 shown in FIG. 17.

The <specific_&_iterative_time> field 1001 can carry information for parking lot opening hours. For instance, if a parking lot is open at 07:00 a.m. everyday, the < specific_&_iterative_time> field 1001 is set to 'C8h 08h'. In this case, an MSB '1' of the 'C8h (=1100 1000)' indicates iterative information.

And, the <time_span> field 1002 is able to carry information for a parking lot opening time interval according to FIG. 11. For instance, if a parking lot keeps open for 15 hours from an opening time, the <time_span> field 1002 can be set to a value of '08h 0Eh'.

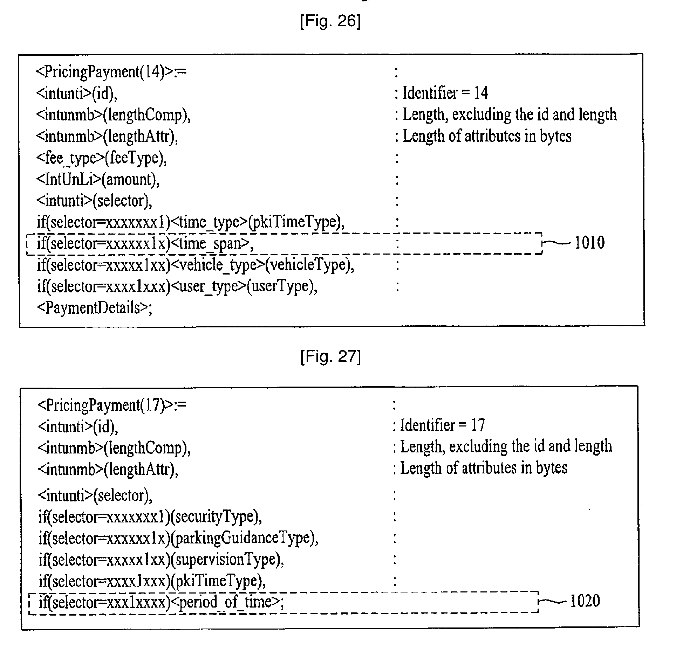

FIG. 26 is an exemplary diagram of the pricing payment component exemplarily shown in FIG. 24.

Referring to FIG. 26, a pricing payment component is provided to indicate a fee system of a parking lot. The pricing payment component is able to include a parking fee amount per unit hour. According to a valueof a selector, the pricing payment component can selectively include at least one of a parking lot time type pkiTimeType), a vehicle type (vehicleType), a user type (userType), and payment details (PaymentDetails). The pricing payment component 922 can include a < time_span> field 101 according to a value of a selector. And, the <time_span> field 101 carries information for a parking fee unit hour. For instance, if a parking lot charges a parking fee designated by the parking fee amount field by a unit of 10 minutes, the <time_span> field 101 caries a value of '10h 0Ah'.

FIG. 27 is an exemplary diagram of the service operation component exemplarily shown in FIG. 24.

Referring to FIG. 27, the service operation component 922a is able to indicate a service provided by a parking lot such as a security service, a supervision service, and the like. According to a value of a selector, the service operation component 922a can selectively include at least one of asecurity type (securityType), a parking guidance type (parkingGuidanceType), a supervision type (supervisionType), and a parking time type (pkiTimeType).

The service operation component 922a includes a <period_of_time> field 1020 according to a value of a selector. In this case, the <period_of_time> field 1020 is able to indicate a period of a service provided by a parking lot. For instance, it is assumed that a parking lot exemplarily operates a security service every weekdays except Saturday and Sunday from October 1, 2006 to December 31, 2006. If so, a start time of the period information field of <period_of_time> is set to October 1,2006 and an end time of the period information field of <period_of_time> is set to December 31, 2006. A selector is set to a value of '01h' indicating that a <day_selector> field follows. And, the <day_selector> field is finally set to a value of 'BEh (= 1011 1110)' indicating a repetition of Monday to Friday.

Of course, if the security service is operated for a period of time for permitting a vehicle parking, e.g., 07:00 a.m. to 06:00 p.m., a <specific_&_iterative_time> field within the <period_of_time> field is set to 07:00 a.m. and the <time_span> field is set to 11 hours. Thus, it is able to use all information elements within the <period_of_time > field.

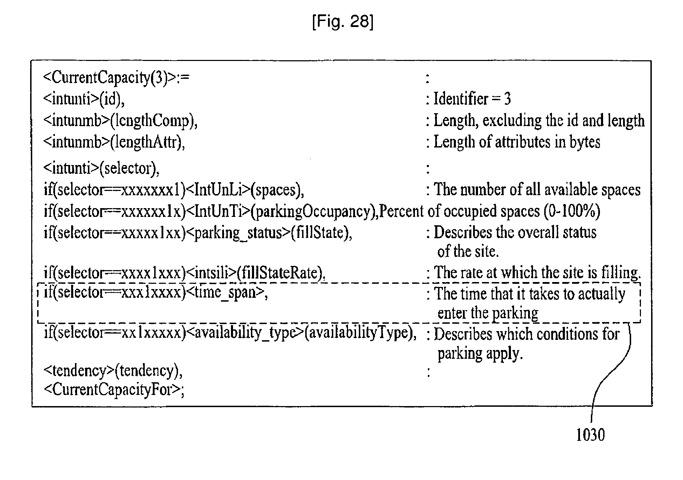

FIG. 28 is an exemplary diagram of the capacity component shown in FIG. 24.

Referring to FIG. 28, the capacity component 93, according to a value of a selector, selectively includes at least one of a number of parking available spaces (spaces), a parking occupancy (parking Occupancy), a parking state (fill State), a parking state varying rate (fill State Rate), and a parking available type (available Type). In particular, according to a value of a selector, the capacity component 93 enables a <time_span> field 1030 to indicate a time taken for parking. For instance, if it takes 5 minutes for complete parking from a parking lot entry of a vehicle, the corresponding field 1030 caries a value of '10h 05h'.

In case of attempting to transmit the above-explained traffic information by the traffic information transmitting and receiving method and apparatus according to the present invention, an example of a type of a transmission signal is explained as follows.

In the traffic information transmitting and receiving method and apparatus according to the present invention, traffic information can be transmitted/received in a broadcast signal format of DVB-T (digital video broadcasting-terrestrial) or DVB-H (digital video bruadcasting-handheld).

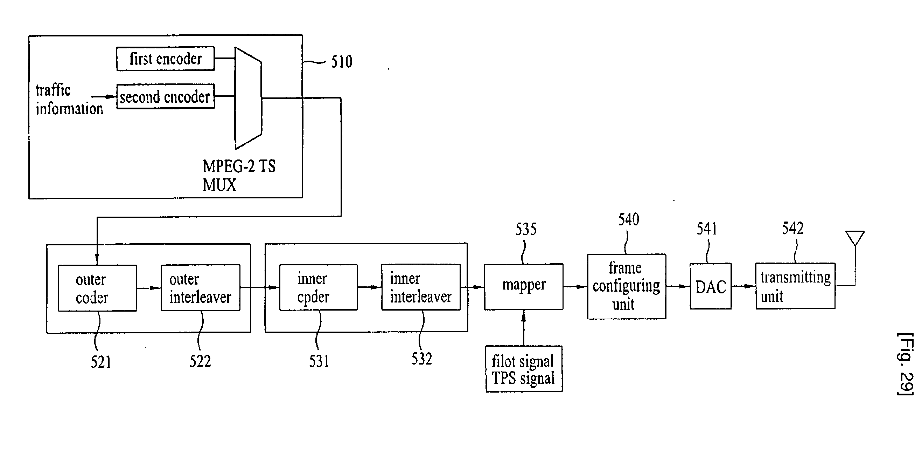

FIG. 29 is a block diagram of an apparatus for transmitting the above-mentioned traffic information according to one embodimentof the present invention.

Referring to FIG. 29, an audio/video signal as a broadcast signal is multiplexed into an MPEG-2 transport stream (TS) by a multiplexing unit 510 and is then outputted. The aforesaid traffic information can be multiplexed with the audio/video signal by M PEG-2 TS format.

For energy dispersal, the multiplexing unit 510 multiplexes a signal including traffic information in an MPEG-2 TS format.

An outer coder 521 encodes multiplexed data to enhance transmission performance for the multiplexed signal. And, an outer interleaver 522 interleaves the encoded data to enhance the transmission performance for the multiplexed signal. For instance, Reed-Solomon coding scheme is usable as the outer coding scheme. And, convolution interleaving is usable for the interleaving.

An inner coder 531 encodes a signal to be transmitted to prepare for the error occurrence in the transmission signal. And, an inner interleaver 532 interleaves the encoded signal to prepare for the error occurrence in the transmission signal. The inner coder 531 is capable of encoding a transmission signal according to punctured convolution codes. And, the inner-interleaving can adopt a native or in-depth interleaving scheme according to a memory use in a transmission mode of 2k, 4k or 8k.

A mapper 535 is capable of mapping a transmission signal into a symbol according to 16QAM, 64QAM, QPSK, or the like by considering a pilot and TPS (transmission parameter signaling) according to a transmission mode.

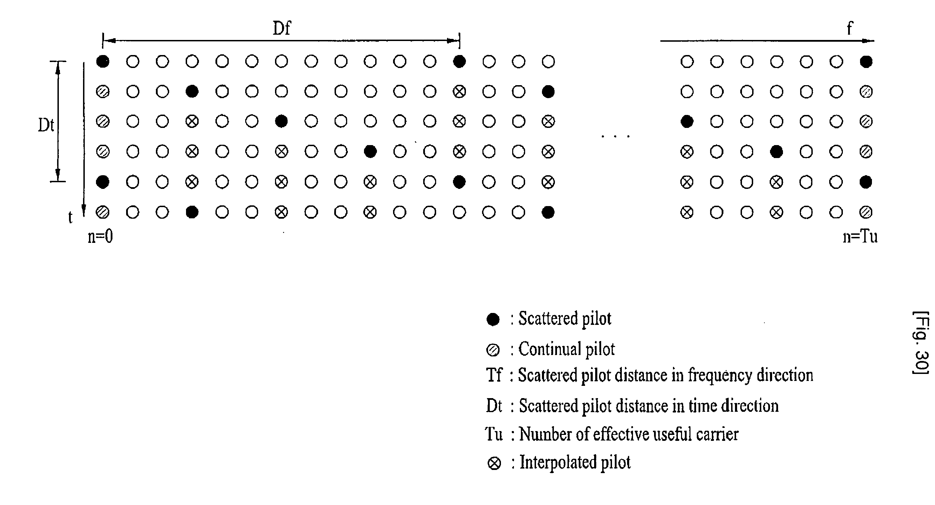

A frame configuring unit 540 modulates the mapped signal by OFDM (orthogonal frequency division multiplexing) and then configures a frame in a manner thata guard interval is inserted in a data interval including the modulated signal. In this case, each frame includes 68 OFDM symbols. Each of the OFDM symbols includes 6,817 carriers in 8k mode or 1,705 carriers in 2k mode. The guard interval is a sort of a cyclic continuation that copies data of the data interval and its length varies according to a transmission mode. An OFDM frame includes a scattered pilot signal, a continual pilot signal, and a TPS carrier. The structure of the frame configured by the frame configuring unit 540 shown in FIG. 29 is explained with reference to FIG. 30 later.

A digital-to-analog converting unit 541 converts a digital broadcast signal having a guard interval and a data interval to an analog signal. And, a transmitting unit 542is able to transmit the analog signal as an RF signal. So, the MPEG-2 TS formatted traffic information can be transmitted by DVB-T. In this case, the MEPG-2 TS (transport stream) format may have a format of PES (packetized elementary stream) or section.

FIG. 30 is a diagram of signal arrangement according to a result of a frame configured by the frame configuring unit shown in FIG. 29.

Referring to FIG. 30, 'Tu' indicates a number of usable subcarriers, 'Dt' indicates a distance between scattered pilots on a time axis, and 'Df' indicates a distance between scattered pilots on a frequency axis. The distance Df between scattered pilots on a frequency domain determines a delayed range of a ghost that can be estimated on a channel. And, FIG. 30 shows a position of a pilot to be interpolated in case of receiving a signal configured by the frame configuring unit.

Meanwhile, symbols are arranged in a manner that the same pilot pattern can appear for each four inputted symbols to perform time interpolation at a pilot position in case of signal reception.

In particular, for a first inputted symbol (t=1), the same scattered pilot signal of a symbol inputted at t=5 is arranged. And, time interpolation can be executed for symbols inputted at t=2, 3, and 4 at a position of a scattered pilot signal in case of signal reception.

A symbol inputted at t=6 has the same scattered pilot pattern of a symbol inputted at t=2, And, time interpolation for signals at t=3, 4, and 5 can be performed at a position of a scattered pilot of the symbol inputted at t=6 and at a position of a scattered pilot of the symbol inputted at t=2.

If the time interpolation is performed in the above manner after a symbol has been inputted at t=7 in case of signal reception, the symbol inputted at t=4 has scattered pilots located at each 4-subcarrier position. So, the interval between scattered pilot signals on a frequency domain of the symbol inputted at t=4 is reduced into ¼ of the original interval between the scattered pilot signals. And, the symbol inputted at t=4 is made to have the pattern configured in a manner that a scattered pilot signal is located at each 4-subcarrier position. Hence, in case of signal reception, more pilot signals can be located at the corresponding symbol. If signals are transmitted using a continual pilot signal and a scattered pilot signal, channel compensation can be adaptively performed according to a status of a reception channel in case of the corresponding signal reception.

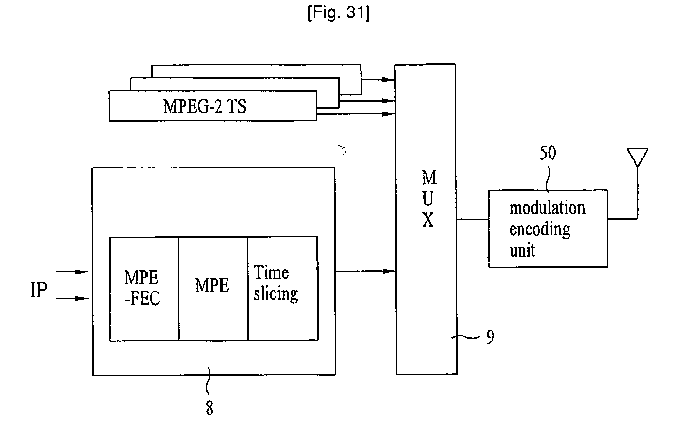

An apparatus for transmitting traffic information according to another embodiment of the present invention is explained with reference to FIG. 31 as follows.

FIG. 31 is a block diagram of an apparatus for transmitting the above-mentioned traffic information according to another embodimentof the present invention.

Referring to FIG. 31, another example of transmitting the traffic information can adapt DVB-H (digital video broadcasting-handheld). The DVB-H expands a broadcasting range to a mobile terminal area and enables transmission information as IP datagram. In this case, the datagram indicates a signal processingmethod of sending a signal as a packet by Internet protocol. And, the datagram includes a header containing an IP address and a data container carrying information. The data container of the packet-unit IP datagram is able to carry video, audio, and traffic information signals. In particular, the DVB-H uses IP datacasting that transmits the video, audio, and traffic information signals by dividing and compressing the video, audio, and traffic information signals by packet unit.

A signal transforming unit 8 is capable of transforming trafficinformation into data including IP by compressing the traffic information by separate packet unit together with audio and video signals. In this case, IP datais embedded into MPEG-2 TS (transport stream) by MPE (multi-protocol encapsulation). The MPE can become MPEG-FEC section data to which a forward error correction(FEC) code is added. If transmission signals are arranged by MPE-FEC (multi-protocol encapsulation-forward error correction), it is able to enhancea carrier-to-noise (CN) ratio of the transmission signals. So, the MPE-FEC data including FEC or the MPE data not including FEC can include IP data formatted transmission data.

The IP datagram encapsulated by MPE by the signal transforming unit 8 can be multiplexed by time slicing for the power consumption reduction. And, the multiplexed signal is transformed into a transport stream to be multiplexed with the MPEG-2 TS carrying the video or audio signal.

A modulating and encoding unit 50 can include the blocks21 to 42 shown n FIG. 29. The traffic information multiplexed into the MEPG-2 TS can be transmitted via a broadcast signal through the modulation and encoding of the DVB-T broadcasting explained in FIG. 29.

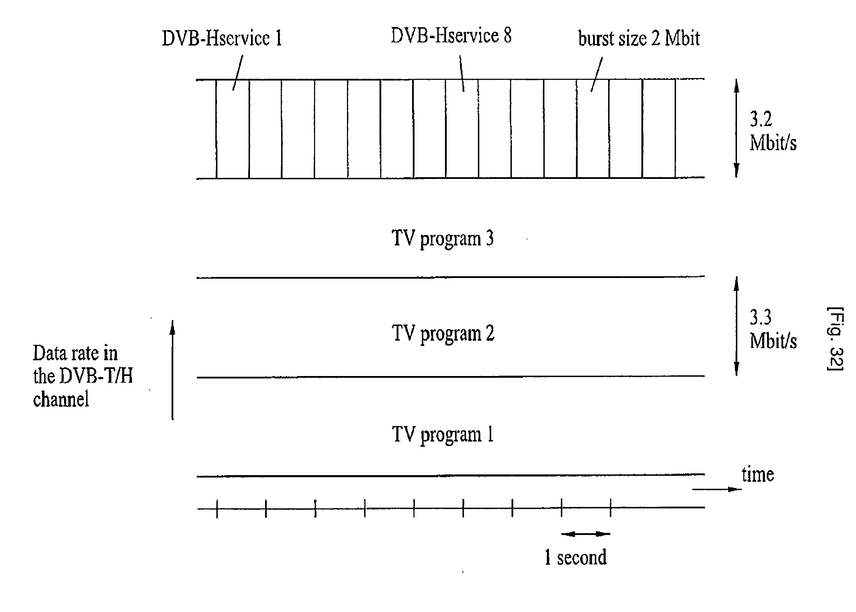

FIG. 32 is a diagram of an example that a DVB-H type sliced service and a service transmitted on a shared channel by DVB-T and DVB-H are transmitted on channels.

Referring to FIG. 32, a program can be transmitted on each channel of DVB-H and DVB-T. In case that the program is transmitted by DVB-H, each service can be transmitted by time division multiplexing according to time slicing. Traffic information is included in IP datagram by DVB-H, transformed into MPE or MPE-FEC, and then transmitted as MPEG-2 TS in which the transformed MPE or MPE-FEC is embedded.

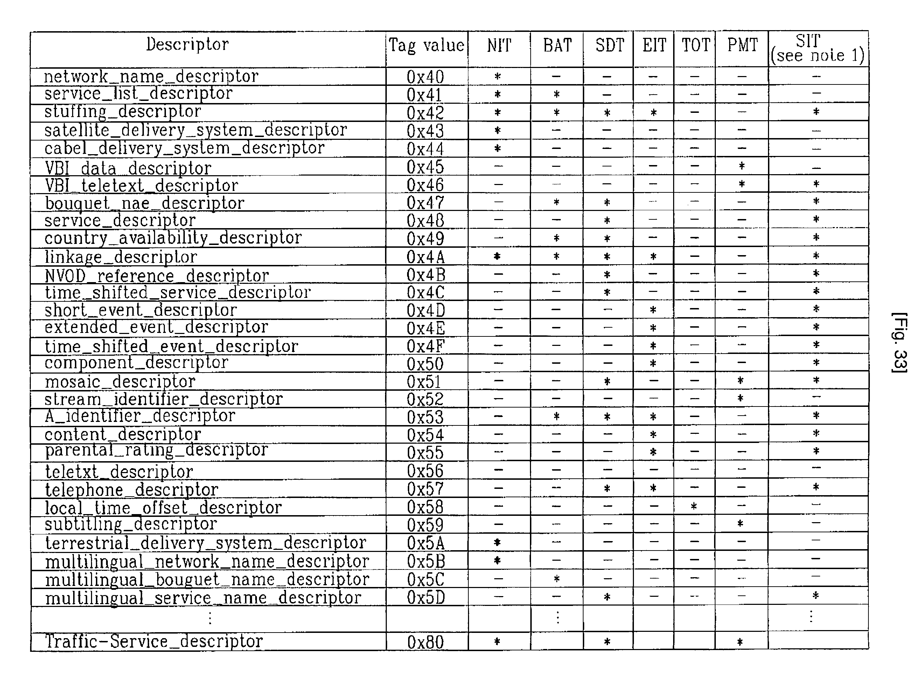

A location of descriptor table information for traffic information according to the present invention is explained with reference to FIG. 33 as follows.

FIG. 33 is an exemplary diagram of a location of a descriptor transmittable by having descriptor table information for traffic information included therein in case that the traffic information is transmitted by the encoding and modulation explained with reference to FIGs. 29 to 31. In the example shown in FIG. 33, for convenience and facilitation of explanation, a descriptor for traffic information to be transmitted is named a traffic service descriptor.

Referring to FIG. 33, table information for parsing traffic information is exemplarily shown if the traffic information transmitted by the present invention is carried by a broadcast signal.

The table information transmitted by being included in the broadcast signal can include NIT, BAT, SDT, EIT, or the like. The table shown in FIG. 33 indicates that a descriptor for parsing a signal included in a broadcast signal is included in which table of a transmission signal. And, a case that a descriptor is included in a table is marked by '*'. For instance, 'network_name_descriptor' can be transmitted by being included in NIT. So, if the NIT is parsed from a broadcast signal, it is able to obtain a transmitted broadcast signal according to contents of the 'network_name_descriptor'.

A traffic service descriptor, which is the service information for traffic information according to the present invention, can be placed in at least one table of NIT, SDT, and PMT.

The NIT is the table information for providing a transport stream group such as a channel frequency and the like and tuning information. The SDT is used in transmitting a service name and parameter within a transport stream. And, the TMT carries PID information for video, audio, data and program clock reference (PCR). If the traffic service descriptor, which is the service information for the traffic information, is transmitted by being included in the PMT (program map table), the PMT can be obtained from parsing PAT (program associated table) from MPEG-2 TS. FIG. 33 exemplarily shows '0x80'as an identifier tag value of the traffic service descriptor.

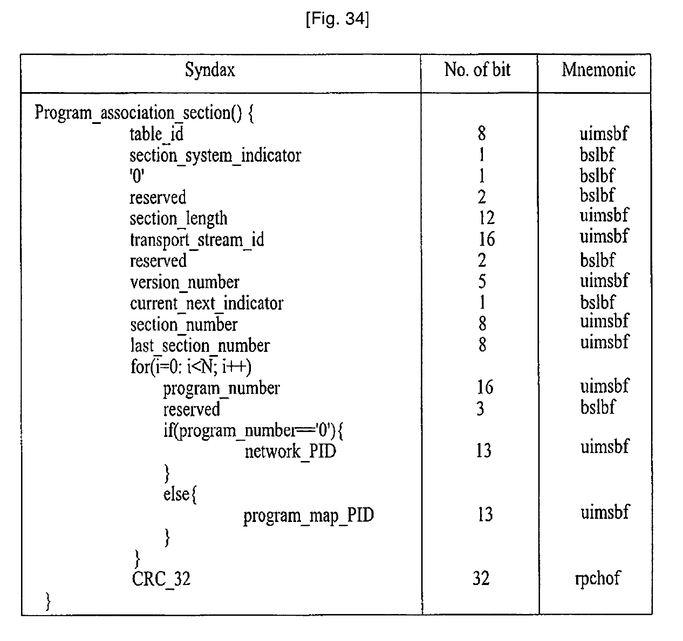

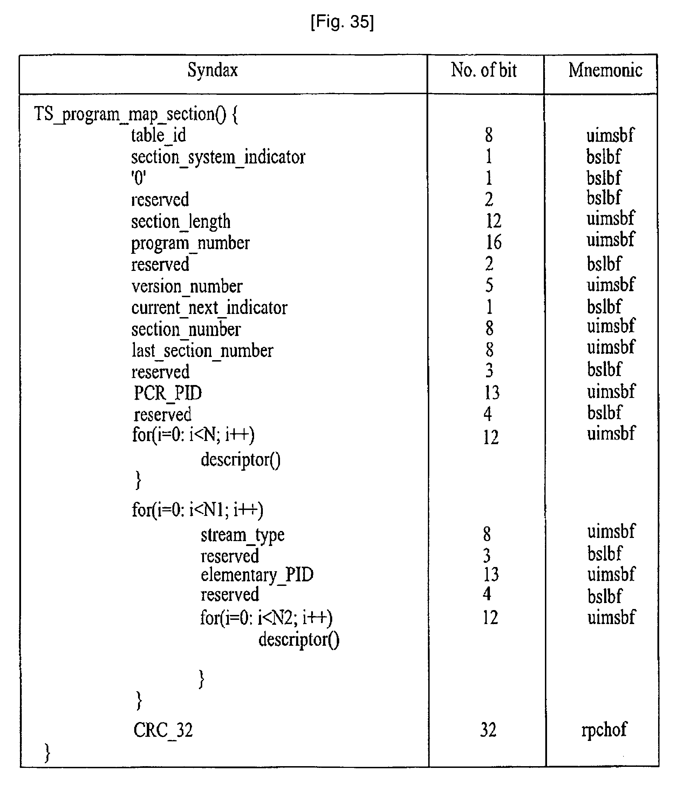

FIG. 34 and FIG. 35 are diagrams of PAT and PMT as program information transmitted by being included in MPEG-2 TS type signals, respectively.

Referring to FIG. 34 and FIG. 35, PAT is a packet having a PID (packet identifier) of '0' and is able to play a role in allocating a transport packet to each program. The PID for the packet carrying the PMT can be obtained from the PAT. And, by obtaining the PID for the packet from the PMT, it is able to what kind of information is carried by a prescribed packet within a stream. So, if a packet having a PID obtained from PMT is found, it is able to obtain the video, audio and traffic information included in the packet.

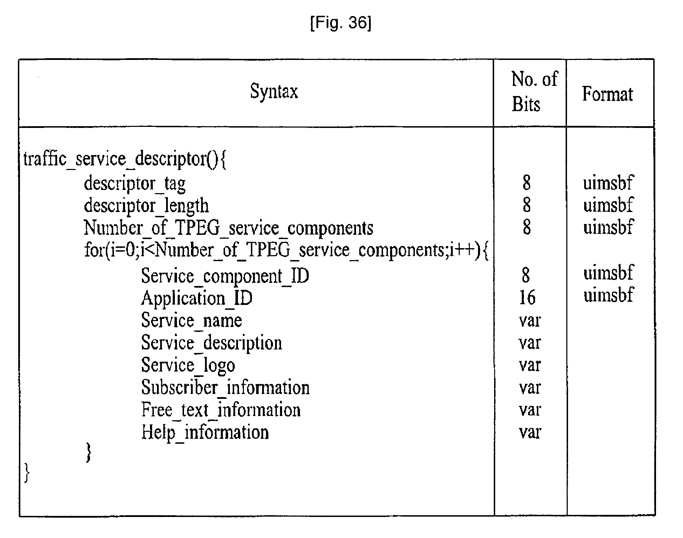

FIG. 36 is an exemplary diagram of a descriptor capable of parsing a broadcast signal carrying traffic information according to the present invention.

Referring to FIG. 36, a traffic service descriptor inclusive in PMT (program map table) is capable of parsing a broadcast signal including traffic information.

First of all, a traffic service descriptor includes a descriptor tag field (descriptor_tag), a descriptor length field (descriptor_length), a service component number field (Number_of_TPEG_Service_Components) indicating a number of service components included in the descriptor, and a plurality of sets of traffic information amounting to a value of the service component number field (Number_of_TPEG_Service_Components). And, each of a plurality of the traffic information sets can include a service component identifier field (Service_Component_ID), an application identifier field (Application_ID) field, and a service information field.

Eight bits are allocated to the descriptor_tag. And, the descriptor_tag is set to a value to identify the traffic information descriptor from other descriptors.

Eight bits are allocatedto the descriptor_length. And, the descriptor_length indicates a length to an end of the descriptor after the descriptor_length.

Eight bits are allocated to the Service_component_ID (SCID). And, the Service_component_ID indicates a value for identifying a service component within one service. A value of the Service_component_ID (SCID) can be decided by a service provider.

Sixteen bits are allocated to the Application_ID. And, a value for identifying each application is assigned to the Application_ID. In particular, an application identifier (AID) is assigned to each traffic information application. And, a new AID is assigned each time a new application is defined.

Each traffic information within the iterative statement can include a service name field (Service_name), a service description field (Service_description), a service logo field (Service_logo), a subscriber information field (Subscriber_information), a free text information field (Free_text_information), and a help information field (Help_infoimation). A length of each of the fields within the service information field is variable and is represented as one format of text string, numeral and graphic.

The Service_name indicates a service name for traffic information and enables a user to identify a service. For instance, the Service_name can carry a service name 'Traffic information service by Broadcasting Station-A'.

The Service_description indicates details of a corresponding service and is provided to explain service contents in detail. For instance, the Service_description can carry a service description 'Public Traffic Information for Outer City in South Metropolitan Area'.

The Service_logo indicates a service logo and enables a service or a service provider to be visually identified. The service logo is mainly transmittable in a bit map or other image format.

The Subscriber_information indicates subscriber information. For instance, the Subscriber_information can carry pricing and payment information for a restricted service component.

The Free_text_information indicates additional information to be transmitted to a user. For instance, the Free_text_information can carry a service interruption, information cancellation, and the like.

And, the Help_information indicates help information to be referred to by a user. For instance, the Help_information can carry an Internet address, a phone number, and the like.

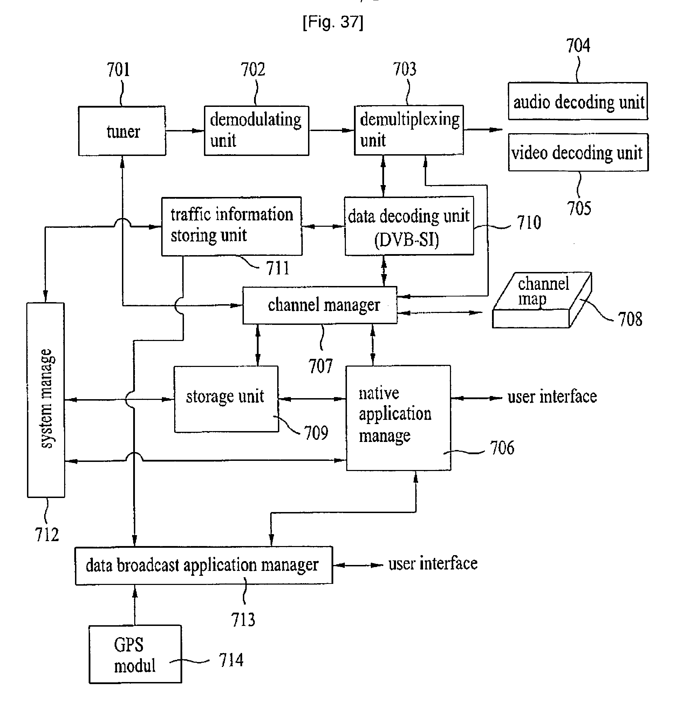

Traffic information according to the present invention is explained with reference to FIG. 37 as follows.

FIG. 37 is a block diagram of an apparatus for receiving traffic information according to one embodimentof the present invention.

Referring to FIG. 37, an apparatus for receiving traffic information according to one embodiment of the present invention includes a tuner 701, a demodulating unit 702, a demultiplexing unit 703, an audio decoding unit 704, a video decoding unit 705, a data decoding unit 710, and a traffic information storing unit 711.

The tuner 701 tunes a frequency of a specific channel via antenna, cable, or satellite, down-converts a signal to an intermediate frequency(IF) signal, and then outputs the down-converted signal to the demodulating unit 702. In this case, the signal received in a frequency of a specific channel includes an audio signal, a video signal, a traffic information signal, and DVB-T/H descriptor table information.

A channel manager 707 makes a request for a table associated with service information to the data decoding unit 710 with reference to channel information stored in a channel map 708 and then received a corresponding result. In this case, the channel manager 707 is capable of controlling channel tuning of the tuner 701 and can be implemented with a software module.

The demodulating unit 702 demodulates the signal outputted from the tuner 701.

The demultiplexing unit 703 separates the demodulated signal into a video signal, an audio signal, and a signal including traffic information and then outputs the signal by TS packet unit.

And, the demultiplexing unit 703 outputs the TS packet including the traffic information to the data decoding unit 710.

The data decoding unit 710 is cable of decoding the TS packet including the traffic information, PSI (program specific information) according to MPEG-2, descriptor table information according to DVB-SI (DVB-service information). In the example shown in FIG. 37, it is assumed that the traffic information is transmitted in a format of DSM-CC (digital storage media-command and control) section of TS packet payload.

In case that a traffic information messageis transmitted in the MPEG-2 TS format according to DVB-T/H, the data decoding unit 710 is able to parse a traffic service descriptor included in the PMT of the table information according to MPEG-2 TS and DVB-SI (DVB-service information).

The data decoding unit 710 parses the traffic information from the DSM-CC section including the traffic information and then stores the parsed traffic information in the traffic information storing unit 711.

The data decoding unit 710 configures a table by collecting sections having the same table identifiers (table_id).

The data decoding unit 710 databases the descriptor table information in the traffic information storing unit 711 and is able to store the traffic information message.

If the data decoding unit 710 parses the traffic service descriptor, it is able to obtain application identifying information, service component identifying information, service information (e.g., service name, service description, service logo, subscriber information, free text information,help information, etc.) and the like of the traffic information message transmitted on a corresponding channel.

A first application manager 706 shown in FIG. 7 drives a native application program stored in a storage unit 709 to perform such a general function as a channel switching and the like. In this case, the native application program means loaded software since a receiving apparatus has been manufactured.

If there is a user request is made to a receiving system via a user interface (UI), the first application manager 706 complies with the user request by displaying a graphic user interface (GUI) on a screen. The user interface receives the user request via an input device such as a remote controller, a keypad, a jog dial, a touchscreen on the screen, and the like and then outputs it to the first application manager 706, a data broadcast application manager 713, and the like.

The first application manager 706 is able to perform channel associated operations by controlling a channel manager 707. In particular, the first application manager 706 is able to manage the channel map 708 and control the data decoding unit 710.

The first application manager 706 stores a GUI control of an overall receiving system, a user request, and a status of the receiving system in the storage unit 709 and reconstructs them from the storage unit 709.

Meanwhile, if a data service requestis made by the user interface (UI), the data broadcast application manager 713 provides a data service to a user by processing the requested data in a manner of driving the corresponding application program stored in the storage unit 709. For this data service, the data broadcast application manager 713 supports the GUI. In this case, the data service is provided in a format of text, audio, graphic, still picture, moving picture, and/or the like.

The data broadcast application manager 713 can be a software or hardware platform to execute an application program stored in the storage unit 709. In this case, the platform includes a Java virtual machine to execute a Java program for example.

And, the data broadcast application manager 713 executes a traffic information providing application program stored in the storage unit 709 to process the traffic information message stored in the traffic information storing unit 711. An exampleof providing the traffic information service in the above manner is explained as follows.

First of all, a traffic information service, which can be provided by the present invention, can be provided to a plurality of users via at least one of text, audio, graphic, still picture and moving picture in a receiver loaded with either an electronic map or a GPS or a receiver failing to be loaded with both of the electronic map and the GPS.

If the receiving system shown in FIG. 36 is loaded with a GPS module 714, the GPS module 714 receives satellite signals transmitted by a plurality of low orbit satellites, extracts current location information (latitude, longitude, altitude), and then outputs the current location information to the data broadcast application manager 713. In this case, an electronic map and various kinds of graphic information including a plurality of links and nodes of roads can be stored in the traffic information storing unit 711, the storage unit 709, or other storage units.

If so, the data broadcast application manager 713 is able to provide the traffic information service requested by a user based on the current position obtained by the GPS module 714, the traffic information message stored in the traffic information storing unit 711, and the like by executing the traffic information providing application program.

By the request made by the data broadcast application manager 713, the traffic information message stored in the traffic information storing unit 711 is read out and then inputted to the data broadcast application manager 713.

The data broadcast application manager 713 interprets the traffic information message read from the traffic information storing unit 711 and then outputs necessary information and/or control signal according to contents of the interpreted message. For facilitation and convenience of explanation, it is assumed that the user made a request for a CTT (congestion and travel time) status.

The data broadcast application manager 713 extracts message identification information and information for a message generation time and message transmission time within the message management container 102 of the traffic information message and then recognizes whether a following container is a CTT status container from the message identification information. In this case, 'message element' information contains a message identifier and a version number. The message identifier and the version number are necessary elements included in all kinds of messages and are used for the data broadcast application manager 713 to manage the traffic information message.

If the following container is the CTT status container 104, information is obtained from the CTT component within the CTT status container 104 to activate a display action according to the road operation status information and the prediction information for the road operation status. And, location information corresponding to the currently received operation information is obtained from the following location container 106.

In this case, the location information is position coordinates (longitude or latitude) of start and end points or a link ID assigned to a link, i.e., a road section according to a location type of the location container. If necessary, a link corresponding to the received information is specified with reference to the information for the respective links and nodes stored in the traffic information storing unit 711. And, the received location coordinates of the link are converted to the link ID to use, and vice versa. According to the present invention, if the location type information is the link ID and if the location information is the text information including the road name associated with the link, it is able to specify a link corresponding to the received information for the operation status with reference to the information for the corresponding link. If the location information is the link ID and if the link ID is a defined code, it is able to specify a link corresponding to the received information for the operation status using the information for the corresponding link with reference to a link system stored in the traffic information storing unit 711.

Meanwhile, the data broadcast application manager 713 reads a necessary electronic map from the traffic information storing unit 711 centering on the current location coordinates received from the GPS module 712 and the displays the read electronic map on a screen. In this case, a point corresponding to the current location can be marked by a graphic sign.

And, the data broadcast application manager 713 controls average link speed information received via the traffic information message to be displayed on a link corresponding to the link ID or the location coordinated of the location container following the container carrying the average link speed information. For this, a color can vary according to an average link speed (e.g., in case of a normal road, red, orange, green and blue indicate 0∼10km/h, 10∼20km/h, 20∼40km/h, and 41km/h or higher, respectively) or a corresponding link is indicated by a numeral. If the congestion transition information extracted from the traffic information message has a value of 1 or 2. a text string ('increase' or 'decrease') or icon assigned to the valuecan be displayed on the corresponding link together. If it is 0 or 3, a displayed status is maintained as it is without a separate update. If the congestion transition information is the information for an average speed variation rate, it is displayed on the screen according to a request made by a user. This is to reduce the visual confusion of a vehicle driver. And, it can be displayed together with an available range, e.g., a set traveling path or a front path.

If the receiving apparatus fails to be provided with the traffic information storing unit 711 storing the electronic map and the like or other storage units, an average link speed of a link ahead of a current traveling path is discriminated by a color or indicated by a numeral. If a path, on which a vehicle loaded with a receiving apparatus such as a traffic information receiving terminal is to travel, is set, it is able to display average link speeds for the links included in the traveling path only.

If the information added to the traffic information message is the information for a famous restaurant, a theatre, or the like within a link, the data broadcast application manager 713 can display the corresponding point to be discriminated on the link displayed on the screen and control the corresponding information to be displayed as text on the screen.

According to a request made by a user, the data broadcast application manager 713 enables information for the travel time, link delay and congestion type for each link, which is extracted from the traffic information message, to be displayed on the screen together with or insteadof the average link speed. If a user makes a request for predicted information about a road operation status by specifying a predicted time, the data broadcast application manager 713 displays a prediction average link speed received via the traffic information messageas a color or numeral instead of a present average speed. Of course, if a user makes a request for a display mode as a prediction travel time mode instead of a present average speed, the data broadcast application manager 713 displays the received prediction travel time information as an electronic map or graphic image on the screen.

If an auto search function for a destination is set in the receiving apparatus shown in FIG. 37, it is able to search or re-search for a preferable path based on the received prediction average link speed or the received prediction travel time. For instance, for each link after the node at which a user is supposed to arrive at a present traveling speed after 30 minutes, it is able to select a link, which takes a shortest time to a set destination, as a traveling path to be displayed as a path on the screen using the received prediction average link speed or the received prediction travel time after 30 minutes. In case that the receiving apparatus according to the embodiment of the present invention shown in FIG. 37 is provided with an audio output means, the operation status information or the prediction information for an operation status for the specified link can be outputted as audio.

The information and/or control information extracted from the traffic information messageis temporarily stored in a volatile memory (not shown in the drawing) such as a RAM and then usable by the data broadcast application manager 713.

After having used the information stored in the volatile memory, the data broadcast application manager 713 keeps storing the used information for a prescribed time instead of deleting the used information. For instance, the data broadcast application manager 713 keeps storing the information within a last one hour, and more particularly, the average link speed or the travel time for each twenty minutes (top of the hour, 20 minutes after the hour, 40 minutes after the hour). It is able to set the last time long and a storing interval short according to a memory capacity. In case that an average speed provided for each link is stored, if a user selects a specific link, the data broadcast application manager 713 displays a history of the average speed stored for the specific link, a travel time history and prediction average link speed, or a prediction travel time on the screen in a graphic format. In this case, a numerical value represented on a graph is displayed by converting the information to km/h unit in case of speed information and a represented name of a presentlink, e.g., a road name is displayed on a top end of the graph together.

A represented name of a link according to the present invention is a link identifier or aroad name. The represented name of the link is recorded in the location coordinate component or the link component included in the aforesaid location container and then received. Alternatively, the represented name of the link is included in the electronic map within the second storage unit 711. Besides, the present traffic information, the previous traffic information, and the future prediction information can be displayed in various ways.

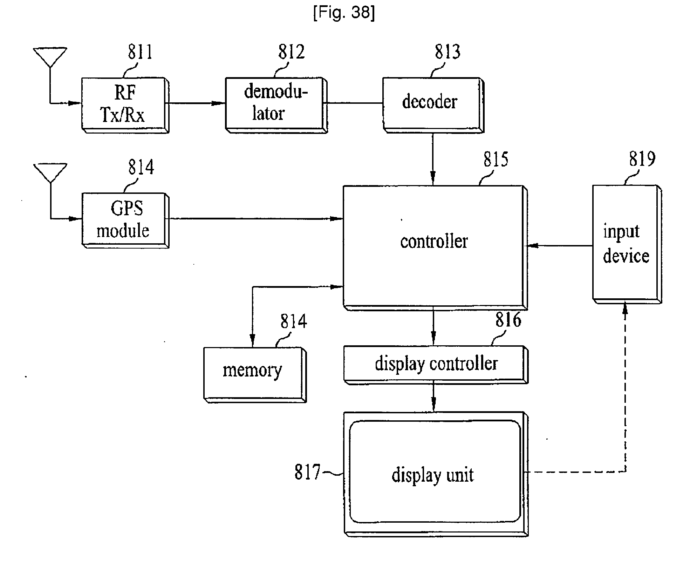

FIG. 38 is a block diagram of an apparatus for receiving traffic information according to another embodiment of the present invention, in which a navigation terminal is shown.

Referring to FIG. 38, an apparatus for receiving traffic information according to another embodiment of the present invention includes a tuner 811, a demodulating unit 812, a decoding unit 813, a storage unit 814, a control unit 815, a display controller 816, a display unit 817, a GPS module 818, and an input unit 819.

The tuner 811 tunes a signal including traffic information having the afore said type time information. The demodulating unit 812 demodulates the tuned signal by a predetermined scheme and then outputs the demodulated signal. The decoding unit 813 decodes the demodulated signal into a traffic information message sequence, interprets each message within the sequence, and then delivers contents of the interpreted messageto the control unit 815.

The decoding unit 813 extracts date/hour and message generation time from a message management container of each traffic information message and then outputs information for discriminating the following data is a congestion information event container, a parking lot information component, or the like from the information of information for 'message component.

The decoding unit 813 decodes location information corresponding to currently transmitted operation information from a location container flowing the congestion information event container and then outputs the decoded location information.

The storage unit 814 stores location information for each link or node and information including time information and traffic information from a received signal.

The control unit 815 enables traffic information outputted by the decoding unit 813 or traffic information stored in the storage unit 814 to be displayed to a user.

The display controller 816 enables the display unit 817 to output the traffic information outputted by the control unit 815.

The input unit 819 receives a control command from a user and then delivers the re ceived control command to the control unit 315.

If the data of the message management container include the components associated with the parking lot information, the decodingunit 813 delivers the decoded information of the components to the control unit 815. The control unit 515 is then able to control the display unit 817 to display the decoded parking lot associated information.

The control unit 815 reads a necessary part of an electronic map from the storage unit 814 centering on current location coordinates received from the GPS module 814 and then controls the display unit 817 to display the traffic information as graphic signs.

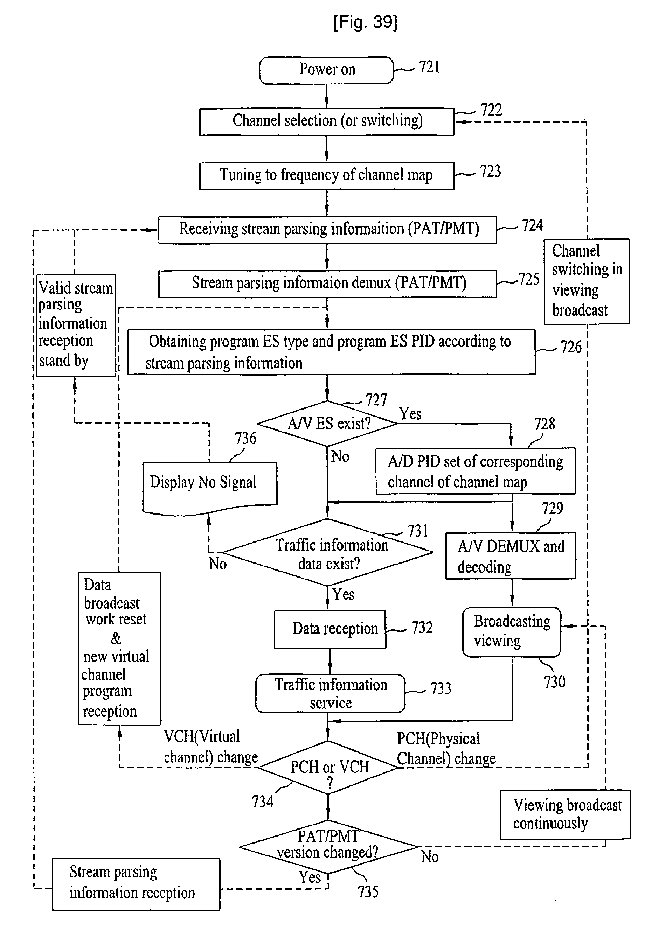

A method of receiving traffic information according to one embodiment of the present invention is explained with reference to FIG. 39 as follows.

FIG. 39 is a flowchart of a method of receivingtraffic information according to one embodiment of the present invention.

Referring to FIG. 39, in case that traffic information is carried by DVB-T/H, traffic information is received via a broadcast signal.

First of all, while a power of a receiver is turned on (S721), if a channel selection or a channel switching is inputted (S722), a physical frequency corresponding to the selected or switched channel is tuned using a channel map (S723).

If so, stream parsing information such as PMT according to MPEG-2 TS format and multiplexed traffic information data can be received via the tuned frequencyof the corresponding channel. If the traffic information data is received (S724), the demultiplexer 703 is able to demultiplex the traffic information message using PID detection from the stream parsing information (PAT/PMT) and section filtering (S725).

If a traffic information descriptor is parsed from the stream parsing information, it is able to obtain an application identifier associated with the traffic information, a service component identifier associated with the traffic information, service information associated with the traffic information, and the like. In particular, information for a virtual channel is extracted from the stream parsing information with reference to a stream type (ES type) and a PID of a stream packet (S726). If there exists an A/V ES for a broadcast output (S727), A/V PID of the corresponding virtual channel (VCH) of the channel map is set (S728). A/V demultiplexing and decoding are then executed (S729). If so, a user is able to view the broadcast corresponding to the A/V (S730).

Meanwhile, if the A/V ES does not exist n the virtual channel in the step S727, it is checked whether the traffic information data is transmitted on the virtual channel (S731). For the presence or non-presence of the traffic information data, an application identifier, a service component identifier, service information and the like can be obtained by parsing the descriptor table information for the traffic information from the stream parsing information. Assuming that the traffic information data is carried by a DSM-CC section, all DSM-CC formatted traffic information data is received using PID of ES obtained from PMT (S732). A user specific traffic information service is then provided (S733).

In the step S731, if the A/V ES does not exist on the virtual channel and if it is confirmed that the traffic information data does not exist, it is decided that the virtual channel is an invalid channel. In this case, it is able to display that a valid channel or signal does not exist (S736). And, the process goes back to the step S724 to newly receive a valid program information table.

Meanwhile, it is checked whether a channel switching requestis made in the course of viewing a broadcast (S734). If a channel switching is requested and if the requested channel switching is a virtual channel switching, a data broadcast work is reset and the process then goes back to the step S726. If the requested channel switching is a physical channel switching, the process goes back to the step S723 to tune a correspondingphysical channel.

If the channel switching request is not made, it is checked whether a version of stream parsing information such as PAT, PMT, and the like is upgraded (S735). If it is confirmed that the stream parsing information version is upgraded in the step S735, this means that channel information is changed from a broadcasting station. So, the process goes back to the step S724 toreceive stream parsing information again. If it is confirmed that there is no channel information change in the step S735, the corresponding broadcast cankeep being viewed.

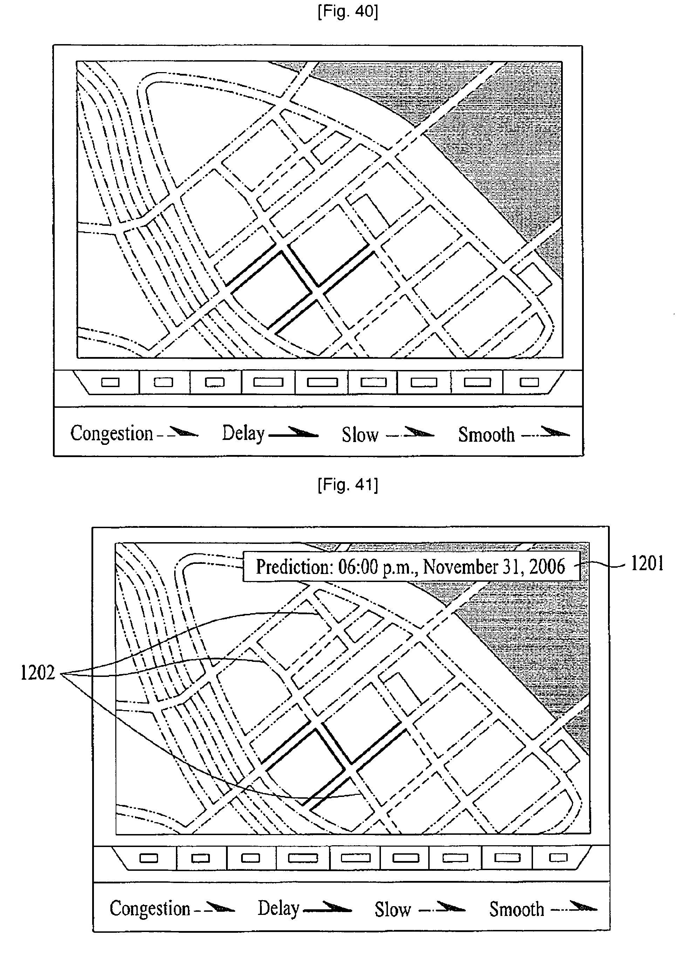

FIGs. 40 to 43 are diagrams for displaying traffic information provided according to an embodimentof the present invention.

Referring to FIG. 40, a color can vary according to an average link speed (e.g., in case of a normal road, red, orange, green and blue indicate 0~10km/h, 10~20km/h, 20~40km/h, and 41km/h or higher, respectively) or a corresponding link is indicated by a numeral.

In case of displaying traffic information including time information, if a user makes a request for an predicted operation status via an input unit, information for a prediction average link speed or prediction average link speed for each link can be displayed.

Meanwhile, a user is able to specify a predicted time via the input unit. For instance, a user is able to specify a predicted time such as '1 hour later' or '07:30 p.m.'.

FIG. 41 shows an example of displaying a predicted time 1201 on an upper end of a screen. For a link having a matched predicted time or a non-approximate predicted time, 'information not acquired' can be represented as a color not used in indicating an operation status, e.g., gray 1202. In case that a destination auto search function is set for a destination, it is able to search or re-search for a shortcut based on a prediction average link speed (or, prediction travel time). For instance, for each link after a diverging point (crossroad) at which a vehicle will arrive at a current traveling speed 30 minutes later, it is able to select a link, which takes a shortest time to a set destination, as a traveling path to be displayed as a path on the screen by obtaining predicted operation information enabling a predicted period or a start time to be used as a prediction average speed (or a prediction travel time) after 30 minutes from the currently received predicted operation information.

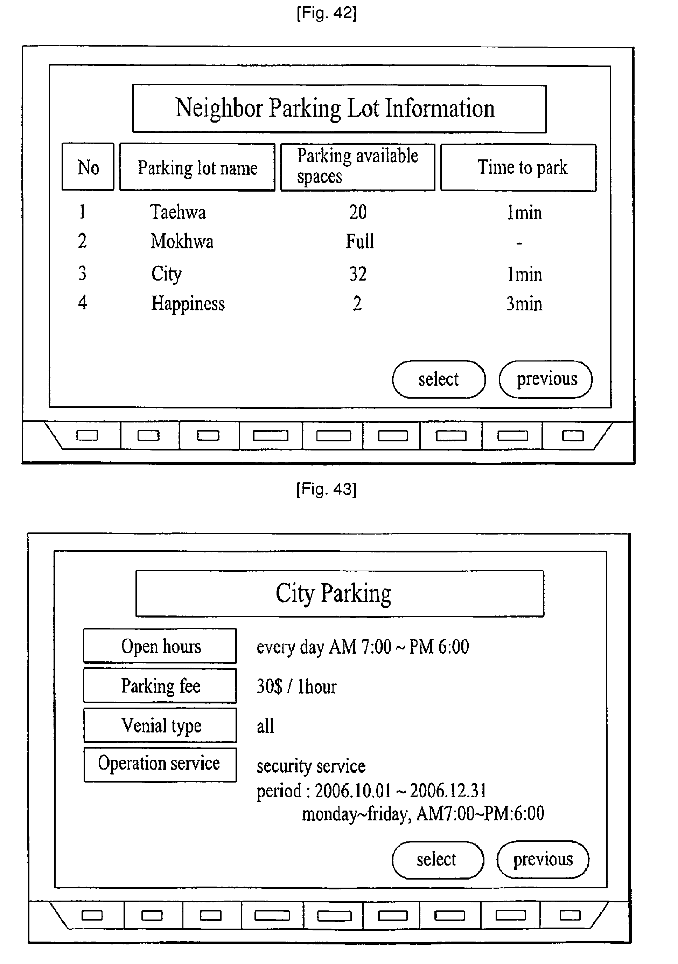

FIG. 42 shows an exemplary diagram of the provided parking lot associated information.

Referring to FIG. 42, if a user makes a request for 'parking lot information', a traffic information receiving apparatus searches parking lot associated information and then displays names of paring lots having location information in the vicinity of a current location like FIG. 4. In particular, an example of displaying a number of parking available spaces obtained from a capacity component for a searched parking lot and a time taken to complete a parking (<time_span> type time) are displayed together.

FIG. 43 exemplarily shows details of one of the searched parking lots.

Referring to FIG. 43, a traffic information receiving apparatus is able to display information for opening hours obtained from an opening hour component, information for a unit time obtained from a pricing payment component, and the like among parking lot associated information,

FIGs. 40 to 43 relate to display examples of providing a user with information for vehicle operation provided by the server 100 via screen. And, these display modes can be variously modified, corrected, and compensated intuitively. So, although a mode of displaying the information for the vehicle operation explained in the present invention on the screen is changed or a mode of the information recognized by a user is changed (e.g., audio mode), if the invention uses the configuration of the information for the vehicle operation and the processing method thereof, it is intended that the present invention covers the modifications and variations of this invention that come within the scope of the appended claims and their equivalents.

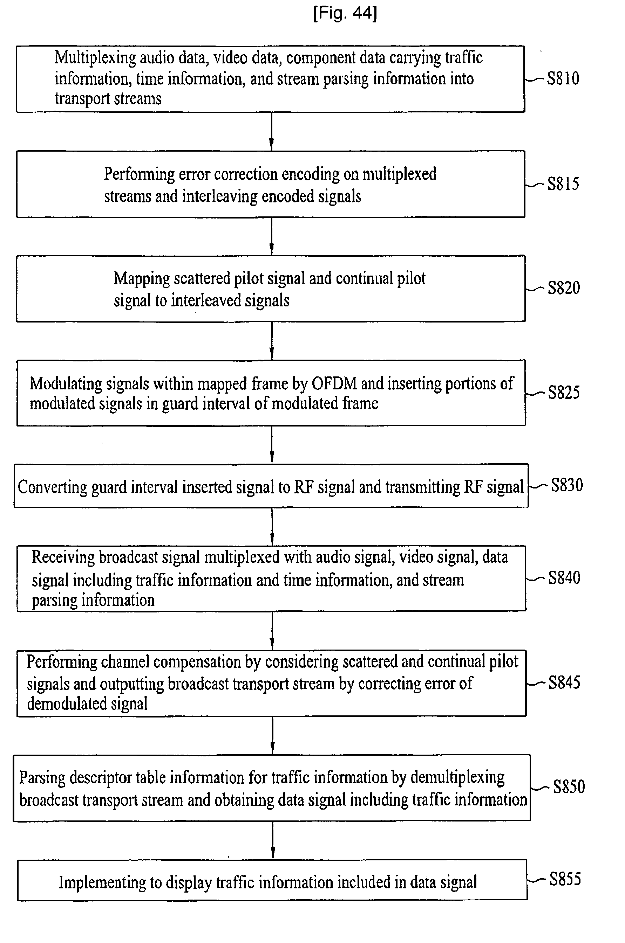

FIG. 44 is a flowchart of a method of transmitting and receiving traffic information according to one embodiment of the present invention.

Referring to FIG. 44, a method of transmitting traffic information may include the following steps.

First of all, audio data, video data, component data carrying traffic information, time information for the traffic information, and stream parsing information including descriptor table information for parsing the traffic information are multiplexed into transport streams, (S810). In this case, the multiplexed traffic information can be encapsulated into IP datagram.

Error correction coding is carried out on the multiplexed streams and the encoded signals are interleaved (S815).

A scattered pilot signal varying according to a time and a continual pilot signal fixed according to a time are mapped within one frame of the interleaved signals (S820).

The mapped signals within the frame are modulated by OFDM (orthogonal frequency division multiplexing). And, portions of the modulated signals within the frame are inserted in a guard interval of the modulated frame (S825).

And, a signal having the guard interval inserted therein isconverted to an RF signal and then transmitted (S830).

A method of receiving the traffic information is explained as follows.

First of all, a broadcast signal generating from multiplexing an audio signal, a video signal, a data signal including traffic information and time information for the traffic information, and stream parsing information for parsing descriptor table information for the traffic information with each other is received (S840).

Channel compensation is carried out by considering a scattered pilot signal and a continualpilot signal of the received signal and a broadcast transport stream is outputted by performing error correction on the demodulated signal (S845).

The descriptor table information for the traffic information is parsed by demultiplexing the broadcast transport stream and the data signal including the traffic information is obtained (S850).

The traffic information included in the data signal is implemented to be displayed (S855).

Accordingly, the present invention enables various kinds of traffic information to be transmitted using DVB-H or DVB-T broadcast signals. In particular, the present invention enables information for CTT status to be transmitted by DVB-H or DVB-T.

### Mode for the Invention

Various embodiments of the present invention are described in the best mode for the implementation of the invention.

### Industrial Applicability

Accordingly, the present invention enables various kinds of traffic information to be transmitted using a broadcast signal by DVB-H or DVB-T. In particular, traffic information according to time information can be coherently represented.

## Claims

1. A method for transmitting traffic information, comprising the steps of
multiplexing audio data, video data, component data carrying the traffic information, time information, and stream parsing information for parsing the traffic information;
performing error correction encoding on the multiplexed streams and interleaving the encoded signals;
inserting a scattered pilot signal changed according to a time and a continual pilot signal fixed according to the time within one frame of the interleaved signals;
modulating the inserted signals within the frame by Orthogonal Frequency Division Multiplexing, OFDM, and inserting portions of the modulated signals within the frame in a guard interval of the modulated frame; and
converting the signal having the guard interval inserted therein to a Radio Frequency, RF, signal and transmitting the RF signal,
wherein the time information includes a selector for selecting a random start time and wherein according to a value of the selector, the time information includes at least one information selected from the group consisting of information indicating a current time of year, month, date, hour, minute, and second and information indicating whether the time is periodic information.

2. The method as in claim 1, wherein the time information includes a selector for selecting a time interval and wherein according to a value of the selector, the time information includes at least one information selected from the group consisting of a period of year unit, a period of month unit, a period of day unit, a period of hour unit, a period of minute unit, a period of second unit

3. The method as in claim 1, wherein the time information includes a selector for selecting a day of the week and a presence or non-presence of the corresponding day of the week and wherein according to a value of the selector, the time information includes at least one information selected from the group consisting of Monday, Tuesday, Wednesday, Thursday, Friday, Saturday, Sunday, and a presence or non-presence of a traffic event repeated on the corresponding day of the week.

4. The method as in any one of claims 1, 2, and 3, wherein the traffic information comprises either current traffic status information or prediction status information at a prescribed start time of the traffic and wherein the time information comprises a time indicated by the status information.

5. The method as in any one of claims 1, 2, and 3, wherein the traffic information is information associated with a parking lot and wherein the time information is time information associated with a use of the parking lot.

6. An apparatus for transmitting traffic information, comprising:
a signal converting unit converting a data signal including the traffic information and time information for the traffic information to Internet Protocol, IP, datagram, the signal converting unit generating a broadcast transport stream including the IP datagram;
a multiplexing unit multiplexing the broadcast transport stream generated by the signal converting unit, a broadcast transport stream including audio data and video data, and stream parsing information including descriptor table information for parsing the traffic information;
an encoding unit performing error correction encoding and interleaving on the signal multiplexed by the multiplexing unit;
an inserting unit inserting a scattered pilot signal changed according to a time and a continual pilot signal fixed according to the time within one frame of the interleaved signals;
a frame configuring unit modulating the signals within the frame inserted by the inserting unit by Orthogonal Frequency Division Multiplexing, OFDM" the frame configuring unit inserting portions of the modulated signals within the frame in a guard interval of the modulated frame; and
a transmitting unit converting the signal having the guard interval inserted therein to an RF signal, the transmitting unit transmitting the RF signal,
wherein the time information includes a selector for selecting a random start time and wherein according to a value of the selector, the time information includes at least one information selected from the group consisting of information indicating a current time of year, month, date, hour, minute, and second and information indicating whether the time is periodic information.

7. An apparatus for receiving traffic information, comprising:
a tuner receiving a broadcast signal including a data signal including the traffic information and time information for the traffic information and stream parsing information for parsing descriptor table information for the traffic information;
a demodulating unit demodulating the broadcast signal;
a demultiplexing unit demultiplexing the signal demodulated by the demodulating unit into the data signal including the traffic information and the descriptor table information for the traffic information;
a data decoding unit outputting the traffic information from the data signal;
a traffic information storing unit storing the traffic information outputted by the data decoding unit; and
a data broadcast application manager implementing the traffic information stored in the traffic information storing unit with a broadcast application according to the time information,
wherein the time information includes a selector for selecting a random start time and wherein according to a value of the selector, the time information includes at least one information selected from the group consisting of information indicating a current time of year, month, date, hour, minute, and second and information indicating whether the time is periodic information.

8. Apparatus according to claim 7, wherein the time information includes a selector for selecting a time interval and wherein according to a value of the selector, the time information includes at least one information selected from the group consisting of a period of year unit, a period of month unit, a period of day unit, a period of hour unit, a period of minute unit, a period of second unit

9. Apparatus according to claim 7, wherein the time information includes a selector for selecting a day of the week and a presence or non-presence of the corresponding day of the week and wherein according to a value of the selector, the time information includes at least one information selected from the group consisting of Monday, Tuesday, Wednesday, Thursday, Friday, Saturday, Sunday, and a presence or non-presence of a traffic event repeated on the corresponding day of the week.

10. Apparatus according to anyone of claims 7, 8 and 9, wherein the traffic information comprises either current traffic status information or prediction status information at a prescribed start time of the traffic and wherein the time information comprises a time indicated by the status information.

11. Apparatus according to anyone of claims 7, 8 and 9, wherein the traffic information is information associated with a parking lot and wherein the time information is time information associated with a use of the parking lot.

12. A method of receiving traffic information, comprising the steps of
receiving a broadcast signal multiplexed with an audio signal, a video signal, a data signal including the traffic information and time information for the traffic information, and stream parsing information for parsing descriptor table information for the traffic information;
outputting a broadcast transport stream by performing channel compensation by performing error correction on the demodulated signal;
obtaining the data signal including the traffic information by parsing program information for the traffic information by demultiplexing the broadcast transport stream; and
implementing to display the traffic information included in the data signal,
wherein the time information includes a selector for selecting a random start time and wherein according to a value of the selector, the time information includes at least one information selected from the group consisting of information indicating a current time of year, month, date, hour, minute, and second and information indicating whether the time is periodic information.

13. The method as in claim 12, wherein the time information includes a selector for selecting a time interval and wherein according to a value of the selector, the time information includes at least one information selected-from the group consisting of a period of year unit, a period of month unit, a period of day unit, a period of hour unit, a period of minute unit, a period of second unit

14. Method according to claim 12; wherein the time information includes a selector for selecting a day of the week and a presence or non-presence of the corresponding day of the week and wherein according to a value of the selector, the time information includes at least one information selected from the group consisting of Monday, Tuesday, Wednesday, Thursday, Friday, Saturday, Sunday, and a presence or non-presence of a traffic event repeated on the corresponding day of the week.

15. Method according to anyone of claims 12, 13 and 14, wherein the traffic information comprises either current traffic status information or prediction status information at a prescribed start time of the traffic and wherein the time information comprises a time indicated by the status information.

## Patentansprüche

1. Verfahren zum Senden von Verkehrsinformationen, das die folgenden Schritte aufweist:
Multiplexen von Audiodaten, Videodaten, Komponentendaten, welche die Verkehrsinformationen befördern, Zeitinformationen und Datenstrom-Syntaxanalyseinformationen zum Analysieren der Syntax der Verkehrsinformationen;
Durchführen der Fehlerkorrekturcodierung der gemultiplexten Datenströme und Verschachteln der codierten Signale
Einfügen eines Streupilotsignals, das entsprechend der Zeit geändert wird, und eines Dauerpilotsignals, das innerhalb eines Rahmens des verschachtelten Signals fixiert ist;
Modulieren der eingefügten Signale innerhalb des Rahmens durch orthogonales Frequenzteilungsmultiplexen OFDM und Einfügen von Abschnitten der modulierten Signale innerhalb des Rahmens in einem Schutzintervall des modulierten Rahmens; und
Umwandeln des Signals mit dem eingefügten Schutzintervall auf ein Funkfrequenz-, HF-Signal und Senden des HF-Signals,
wobei die Zeitinformationen einen Selektor zum Auswählen einer zufälligen Anfangszeit umfassen, wobei die Zeitinformationen entsprechend eines Werts des Selektors wenigstens eine der Informationen enthalten, die aus der Gruppe ausgewählt sind, die aus Informationen, die eine aktuelle Zeit des Jahrs, Monats, Datums, der Stunde, Minute und Sekunde angeben, und Informationen, die angeben, ob die Zeit eine periodische Information ist, besteht.

2. Verfahren nach Anspruch 1, wobei die Zeitinformationen einen Selektor zum Auswählen eines Zeitintervalls umfassen und wobei die Zeitinformationen entsprechend eines Werts des Selektors wenigstens eine der Informationen enthalten, die aus der Gruppe ausgewählt sind, die aus einem Jahreseinheitszeitraum, einem Monatseinheitszeitraum, einem Tageseinheitszeitraum, einem Stundeneinheitszeitraum, einem Minuteneinheitszeitraum, einem Sekundeneinheitszeitraum besteht.

3. Verfahren nach Anspruch 1, wobei die Zeitinformationen einen Selektor zum Auswählen eines Wochentags und eines Vorhandenseins oder Nichtvorhandenseins des entsprechenden Wochentags umfaßt und wobei die Zeitinformationen entsprechend eines Werts des Selektors wenigstens eine der Informationen enthalten, die aus der Gruppe ausgewählt sind, die aus Montag, Dienstag, Mittwoch, Donnerstag, Freitag, Samstag, Sonntag und einem Vorhandensein oder Nichtvorhandensein eines Verkehrsereignisses, das sich an dem entsprechenden Wochentag wiederholt, besteht.

4. Verfahren nach einem der Ansprüche 1, 2 und 3, wobei die Verkehrsinformationen entweder aktuelle Verkehrszustandsinformationen oder Vorhersagezustandsinformationen zu einer vorgeschriebenen Anfangszeit des Verkehrs aufweisen und wobei die Zeitinformationen eine Zeit aufweisen, die durch die Zustandinformationen angegeben wird.

5. Verfahren nach einem der Ansprüche 1, 2 und 3, wobei die Verkehrsinformationen Informationen sind, die zu einem Parkplatz gehören, und wobei die Zeitinformationen Zeitinformationen sind, die zu einer Nutzung des Parkplatzes gehören.

6. Vorrichtung zum Senden von Verkehrsinformationen, die aufweist:
eine Signalumwandlungseinheit zum Umwandeln eines Datensignals, das die Verkehrsinformationen und Zeitinformationen für die Verkehrsinformationen in ein Internetprotokoll, IP-Datagramm umwandelt, wobei die Signalumwandlungseinheit einen Rundruftransportdatenstrom einschließlich des IP-Datagramms erzeugt;
eine Multiplexeinheit, welche den von der Signalumwandlungseinheit erzeugten Rundruftransportdatenstrom, einen Rundruftransportdatenstrom einschließlich Audiodaten und Videodaten und Datenstrom-Syntaxanalyseinformationen einschließlich von Deskriptorentabelleninformationen zum Analysieren der Syntax der Verkehrsinformationen multiplext;
eine Codiereinheit, welche die Fehlerkorrekturcodierung und das Verschachteln des von der Multiplexeinheit gemultiplexten Signals durchführt;
eine Einfügungseinheit, die ein zeitlich geändertes Streupilotsignal und ein zeitlich innerhalb eines Rahmens der verschachtelten Signale fixiertes Pilotsignal einfügt;
eine Rahmenkonfigurationseinheit, welche die von der Einfügungseinheit eingefügten Signale innerhalb des Rahmens durch orthogonales Frequenzteilungsmultiplexen OFDM moduliert, wobei die Rahmenkonfigurationseinheit Abschnitte der modulierten Signale innerhalb des Rahmens in ein Schutzintervall des modulierten Rahmens einfügt; und
eine Sendeeinheit, die das Signal mit dem eingefügten Schutzintervall in ein HF-Signal umwandelt, wobei die Sendeeinheit das HF-Signal sendet,
wobei die Zeitinformationen einen Selektor zum Auswählen einer zufälligen Anfangszeit umfassen und wobei die Zeitinformationen entsprechend eines Werts des Selektors wenigstens eine der Informationen enthalten, die aus der Gruppe ausgewählt sind, die aus Informationen, die eine aktuelle Zeit des Jahrs, Monats, Tags, der Stunde, Minute und Sekunde angeben, und Informationen, die angeben, ob die Zeit eine periodische Information ist, besteht.

7. Vorrichtung zum Empfangen von Verkehrsinformationen, die aufweist:
einen Tuner, der ein Rundrufsignal empfängt, das die Verkehrsinformationen und Zeitinformationen für die Verkehrsinformationen und Datenstrom-Syntaxanalyseinformationen zum Analysieren der Syntax der Deskriptorentabelleninformationen für die Verkehrsinformationen enthält;
eine Demodulationseinheit, die das Rundrufsignal demoduliert;
eine Demultiplexeinheit, die das von der Demodulationseinheit demodulierte Signal in das Datensignal demultiplext, das die Verkehrsinformationen und die Deskriptorentabelleninformationen für die Verkehrsinformationen enthält;
eine Datendecodiereinheit, welche die Verkehrsinformationen aus dem Datensignal ausgibt;
eine Verkehrsinformationsspeichereinheit, welche die von der Datendecodiereinheit ausgegebenen Verkehrsinformationen speichert; und
einen Datenrundruf-Anwendungsmanager, der die in der Verkehrsinformationsspeichereinheit gespeicherten Verkehrsinformationen entsprechend den Zeitinformationen mit einer Rundrufanwendung implementiert,
wobei die Zeitinformationen einen Selektor zum Auswählen einer zufälligen Anfangszeit umfassen und wobei die Zeitinformationen entsprechend eines Werts des Selektors wenigstens eine der Informationen enthalten, die aus der Gruppe ausgewählt sind, die aus Informationen, die eine aktuelle Zeit des Jahrs, Monats, Tags, der Stunde, Minute und Sekunde angeben, und Informationen, die angeben, ob die Zeit eine periodische Information ist, besteht.

8. Vorrichtung nach Anspruch 7, wobei die Zeitinformationen einen Selektor zum Auswählen eines Zeitintervalls umfassen und wobei die Zeitinformationen entsprechend eines Werts des Selektors wenigstens eine der Informationen enthalten, die aus der Gruppe ausgewählt sind, die aus einem Jahreseinheitszeitraum, einem Monatseinheitszeitraum, einem Tageseinheitszeitraum, einem Stundeneinheitszeitraum, einem Minuteneinheitszeitraum, einem Sekundeneinheitszeitraum besteht.

9. Vorrichtung nach Anspruch 7, wobei die Zeitinformationen einen Selektor zum Auswählen eines Wochentags und eines Vorhandenseins oder Nichtvorhandenseins des entsprechenden Wochentags umfaßt und wobei die Zeitinformationen entsprechend eines Werts des Selektors wenigstens eine der Informationen enthalten, die aus der Gruppe ausgewählt sind, die aus Montag, Dienstag, Mittwoch, Donnerstag, Freitag, Samstag, Sonntag und einem Vorhandensein oder Nichtvorhandensein eines Verkehrsereignisses, das sich an dem entsprechenden Wochentag wiederholt, besteht.

10. Vorrichtung nach einem der Ansprüche 7, 8 und 9, wobei die Verkehrsinformationen entweder aktuelle Verkehrszustandsinformationen oder Vorhersagezustandsinformationen zu einer vorgeschriebenen Anfangszeit des Verkehrs aufweisen und wobei die Zeitinformationen eine Zeit aufweisen, die durch die Zustandinformationen angegeben wird.

11. Vorrichtung nach einem der Ansprüche 7, 8 und 9, wobei die Verkehrsinformationen Informationen sind, die zu einem Parkplatz gehören, und wobei die Zeitinformationen Zeitinformationen sind, die zu einer Nutzung des Parkplatzes gehören.

12. Verfahren zum Empfangen von Verkehrsinformationen, das die folgenden Schritte aufweist:
Empfangen eines Rundrufsignals, das mit einem Audiosignal, einem Videosignal, einem Datensignal einschließlich der Verkehrsinformationen und Zeitinformationen für die Verkehrsinformationen und Datenstrom-Syntaxanalyseinformationen zum Analysieren der Syntax der Deskriptorentabelleninformationen für die Verkehrsinformationen gemultiplext ist;
Ausgeben eines Rundruftransportdatenstroms durch Durchführen der Kanalkompensation durch Durchführen der Fehlerkorrektur für das demodulierte Signal;
Erhalten des Datensignals einschließlich der Verkehrsinformationen durch Analysieren der Syntax von Programminformationen für die Verkehrsinformationen durch Demultiplexen des Rundruftransportdatenstroms; und
Implementieren der Anzeige der in dem Datensignal enthaltenen Verkehrsinformationen,
wobei die Zeitinformationen einen Selektor zum Auswählen einer zufälligen Anfangszeit umfassen, wobei die Zeitinformationen entsprechend eines Werts des Selektors wenigstens eine der Informationen enthalten, die aus der Gruppe ausgewählt sind, die aus Informationen, die eine aktuelle Zeit des Jahrs, Monats, Tags, der Stunde, Minute und Sekunde angeben, und Informationen, die angeben, ob die Zeit eine periodische Information ist, besteht.

13. Verfahren nach Anspruch 12, wobei die Zeitinformationen einen Selektor zum Auswählen eines Zeitintervalls umfassen und wobei die Zeitinformationen entsprechend eines Werts des Selektors wenigstens eine der Informationen enthalten, die aus der Gruppe ausgewählt sind, die aus einem Jahreseinheitszeitraum, einem Monatseinheitszeitraum, einem Tageseinheitszeitraum, einem Stundeneinheitszeitraum, einem Minuteneinheitszeitraum, einem Sekundeneinheitszeitraum besteht.

14. Verfahren nach Anspruch 12, wobei die Zeitinformationen einen Selektor zum Auswählen eines Wochentags und eines Vorhandenseins oder Nichtvorhandenseins des entsprechenden Wochentags umfaßt und wobei die Zeitinformationen entsprechend eines Werts des Selektors wenigstens eine der Informationen enthalten, die aus der Gruppe ausgewählt sind, die aus Montag, Dienstag, Mittwoch, Donnerstag, Freitag, Samstag, Sonntag und einem Vorhandensein oder Nichtvorhandensein eines Verkehrsereignisses, das sich an dem entsprechenden Wochentag wiederholt, besteht.

15. Verfahren nach einem der Ansprüche 12, 13 und 14, wobei die Verkehrsinformationen entweder aktuelle Verkehrszustandsinformationen oder Vorhersagezustandsinformationen zu einer vorgeschriebenen Anfangszeit des Verkehrs aufweisen und wobei die Zeitinformationen eine Zeit aufweisen, die durch die Zustandinformationen angegeben wird.

## Revendications

1. Procédé pour transmettre des informations de circulation, comprenant les étapes consistant à :
multiplexer des données audio, des données vidéo, des données de composante contenant les informations de circulation, des informations de temps, et des informations d'analyse de flux pour analyser les informations de circulation ;
réaliser un encodage de correction d'erreur sur les flux multiplexés et entrelacer les signaux encodés ;
insérer un signal pilote dispersé changé selon un temps et un signal pilote continu fixé selon le temps à l'intérieur d'une trame des signaux entrelacés ;
moduler les signaux insérés à l'intérieur de la trame par multiplexage par répartition orthogonale de la fréquence, OFDM, et insérer des parties des signaux modulés à l'intérieur de la trame dans un intervalle de garde de la trame modulée ; et
convertir le signal possédant l'intervalle de garde inséré dans celui-ci en un signal radiofréquence, RF, et transmettre le signal RF,
dans lequel les informations de temps comprennent un sélecteur pour sélectionner un temps de commencement aléatoire et dans lequel, selon une valeur du sélecteur, les informations de temps comprennent au moins une information sélectionnée parmi le groupe constitué d'informations indiquant un temps actuel de l'année, du mois, de la date, de l'heure, de la minute, et des secondes et d'informations indiquant si le temps est une information périodique.

2. Procédé selon la revendication 1, dans lequel les informations de temps comprennent un sélecteur pour sélectionner un intervalle de temps et dans lequel, selon une valeur du sélecteur, les informations de temps comprennent au moins une information sélectionnée parmi le groupe constitué d'une unité de période d'année, d'une unité de période de mois, d'une unité de période de jour, d'une unité de période d'heure, d'une unité de période de minute, d'une unité de période de seconde.

3. Procédé selon la revendication 1, dans lequel les informations de temps comprennent un sélecteur pour sélectionner un jour de la semaine et une présence ou non-présence du jour correspondant de la semaine et dans lequel, selon une valeur du sélecteur, les informations de temps comprennent au moins une information sélectionnée parmi le groupe constitué de lundi, de mardi, de mercredi, de jeudi, de vendredi, de samedi, de dimanche, et d'une présence ou non-présence d'un événement de circulation répété le jour correspondant de la semaine.

4. Procédé selon une quelconque des revendications 1, 2 et 3, dans lequel les informations de circulation comprennent des informations d'état de circulation actuelles ou des informations d'état prédites à un temps de commencement prescrit de la circulation et dans lequel les informations de temps comprennent un temps indiqué par les informations d'état.

5. Procédé selon une quelconque des revendications 1, 2 et 3, dans lequel les informations de circulation sont des informations associées à un parc de stationnement et dans lequel les informations de temps sont des informations de temps associées à une utilisation du parc de stationnement.

6. Appareil pour transmettre des informations de circulation, comprenant :
une unité de conversion de signal convertissant un signal de données comprenant les informations de circulation et des informations de temps pour les informations de circulation en datagramme de protocole internet, IP, l'unité de conversion de signal générant un flux de transport de diffusion comprenant le datagramme IP ;
une unité de multiplexage multiplexant le flux de transport de diffusion généré par l'unité de conversion de signal, un flux de transport de diffusion comprenant des données audio et des données vidéo, et des informations d'analyse de flux comprenant des informations de table de description pour analyser les informations de circulation ;
une unité d'encodage réalisant un encodage de correction d'erreur et un entrelacement sur le signal multiplexé par l'unité de multiplexage ;
une unité d'insertion insérant un signal pilote dispersé changé selon un temps et un signal pilote continu fixé selon le temps à l'intérieur d'une trame des signaux entrelacés ;
une unité de configuration de trame modulant les signaux à l'intérieur de la trame,
insérés par l'unité d'insertion, par multiplexage par répartition orthogonale de la fréquence, OFDM, l'unité de configuration de trame insérant des parties des signaux modulés à l'intérieur de la trame dans un intervalle de garde de la trame modulée ; et
une unité de transmission convertissant le signal possédant l'intervalle de garde inséré dans celui-ci en un signal RF, l'unité de transmission transmettant le signal RF,
dans lequel les informations de temps comprennent un sélecteur pour sélectionner un temps de commencement aléatoire et dans lequel, selon une valeur du sélecteur, les informations de temps comprennent au moins une information sélectionnée parmi le groupe constitué d'informations indiquant un temps actuel de l'année, du mois, de la date, de l'heure, de la minute, et des secondes et d'informations indiquant si le temps est une information périodique.

7. Appareil pour recevoir des informations de circulation, comprenant :
un tuner recevant un signal de diffusion comprenant un signal de données comprenant les informations de circulation et des informations de temps pour les informations de circulation et des informations d'analyse de flux pour analyser des informations de table de description pour les informations de circulation ;
une unité de démodulation démodulant le signal de diffusion ;
une unité de démultiplexage démultiplexant le signal démodulé par l'unité de démodulation dans le signal de données comprenant les informations de circulation et les informations de table de description pour les informations de circulation ;
une unité de décodage de données produisant les informations de circulation à partir du signal de données ;
une unité de stockage d'informations de circulation stockant les informations de circulation produites par l'unité de décodage de données ; et
un élément de gestion d'application de diffusion de données implémentant les informations de circulation stockées dans les unité de stockage d'informations de circulation avec une application de diffusion selon les informations de temps,
dans lequel les informations de temps comprennent un sélecteur pour sélectionner un temps de commencement aléatoire et dans lequel, selon une valeur du sélecteur, les informations de temps comprennent au moins une information sélectionnée parmi le groupe constitué d'informations indiquant un temps actuel de l'année, du mois, de la date, de l'heure, de la minute, et des secondes et d'informations indiquant si le temps est une information périodique.

8. Appareil selon la revendication 7, dans lequel les informations de temps comprennent un sélecteur pour sélectionner un intervalle de temps et dans lequel, selon une valeur du sélecteur, les informations de temps comprennent au moins une information sélectionnée parmi le groupe constitué d'une unité de période d'année, d'une unité de période de mois, d'une unité de période de jour, d'une unité de période d'heure, d'une unité de période de minute, d'une unité de période de seconde.

9. Appareil selon la revendication 7, dans lequel les informations de temps comprennent un sélecteur pour sélectionner un jour de la semaine et une présence ou non-présence du jour correspondant de la semaine et dans lequel, selon une valeur du sélecteur, les informations de temps comprennent au moins une information sélectionnée parmi le groupe constitué de lundi, de mardi, de mercredi, de jeudi, de vendredi, de samedi, de dimanche, et d'une présence ou non-présence d'un événement de circulation répété le jour correspondant de la semaine.

10. Appareil selon une quelconque des revendications 7, 8 et 9, dans lequel les informations de circulation comprennent des informations d'état de circulation actuelles ou des informations d'état prédites à un temps de commencement prescrit de la circulation et dans lequel les informations de temps comprennent un temps indiqué par les informations d'état.

11. Appareil selon une quelconque des revendications 7, 8 et 9, dans lequel les informations de circulation sont des informations associées à un parc de stationnement et dans lequel les informations de temps sont des informations de temps associées à une utilisation du parc de stationnement.

12. Procédé de réception d'informations de circulation, comprenant les étapes consistant à :
recevoir un signal de diffusion multiplexé avec un signal audio, un signal vidéo, un signal de données comprenant les informations de circulation et des informations de temps pour les informations de circulation, et des informations d'analyse de flux pour analyser des informations de table de description pour les informations de circulation ;
produire un flux de transport de diffusion en réalisant une compensation de canal en réalisant une correction d'erreur sur le signal démodulé ;
obtenir le signal de données comprenant les informations de circulation en analysant des informations de programme pour les informations de circulation en démultiplexant le flux de transport de diffusion ; et
implémenter un affichage des informations de circulation incluses dans le signal de données,
dans lequel les informations de temps comprennent un sélecteur pour sélectionner un temps de commencement aléatoire et dans lequel, selon une valeur du sélecteur, les informations de temps comprennent au moins une information sélectionnée parmi le groupe constitué d'informations indiquant un temps actuel de l'année, du mois, de la date, de l'heure, de la minute, et des secondes et d'informations indiquant si le temps est une information périodique.

13. Procédé selon la revendication 12, dans lequel les informations de temps comprennent un sélecteur pour sélectionner un intervalle de temps et dans lequel, selon une valeur du sélecteur, les informations de temps comprennent au moins une information sélectionnée parmi le groupe constitué d'une unité de période d'année, d'une unité de période de mois, d'une unité de période de jour, d'une unité de période d'heure, d'une unité de période de minute, d'une unité de période de seconde.

14. Procédé selon la revendication 12, dans lequel les informations de temps comprennent un sélecteur pour sélectionner un jour de la semaine et une présence ou non-présence du jour correspondant de la semaine et dans lequel, selon une valeur du sélecteur, les informations de temps comprennent au moins une information sélectionnée parmi le groupe constitué de lundi, de mardi, de mercredi, de jeudi, de vendredi, de samedi, de dimanche, et d'une présence ou non-présence d'un événement de circulation répété le jour correspondant de la semaine.

15. Procédé selon une quelconque des revendications 12, 13 et 14, dans lequel les informations de circulation comprennent des informations d'état de circulation actuelles ou des informations d'état prédites à un temps de commencement prescrit de la circulation et dans lequel les informations de temps comprennent un temps indiqué par les informations d'état.
